# EUROPÄISCHE PATENTSCHRIFT

(11) **EP 3 724 069 B1**
(45) Veröffentlichungstag und Bekanntmachung des Hinweises auf die Patenterteilung: **01.04.2026**
(21) Anmeldenummer: 18842631.6
(22) Anmeldetag: 13.12.2018
(51) Int. Cl.: B64C 17/04, B64F 1/00, B64C 27/00, B64C 39/02, B64C 29/00, B64U 10/16, B64U 20/40, B64U 70/99, B64U 80/25

(54) **MODULARES FLUGGERÄT**
MODULAR FLIGHT APPARATUS
OBJET VOLANT MODULAIRE

(30) Priorität: 15.12.2017 DE 102017130251; 15.12.2017 DE 102017130252; 15.12.2017 DE 102017130253; 15.12.2017 DE 102017130255; 15.12.2017 DE 102017130254
(43) Veröffentlichungstag der Anmeldung: 21.10.2020
(73) Patentinhaber: GermaniumTech GmbH, 01328 Dresden (DE)
(72) Erfinder: WERNER, Jens, 01723 Wilsdruff STT Kesselsdorf (DE); PEZUS, Phil, 01723 Wilsdruff STT Kesselsdorf (DE); BIELER, Matthias, 01723 Wilsdruff STT Kesselsdorf (DE); FRANKE, Florian, 01723 Wilsdruff STT Kesselsdorf (DE)
(74) Vertreter: Lippert Stachow Patentanwälte Rechtsanwälte Partnerschaft mbB
(86) Internationale Anmeldenummer: PCT/DE2018/101017
(87) Internationale Veröffentlichungsnummer: WO 2019/114884

(56) Entgegenhaltungen:
- EP-A1- 3 243 747
- WO-A1-2016/185572
- DE-U1- 202012 001 750
- DE-U1- 202012 001 750
- FR-A- 1 347 415
- JP-A- 2002 370 696
- JP-A- 2014 240 242
- US-A- 3 589 646
- US-A1- 2006 266 881
- US-B1- 9 630 713

## Beschreibung

Die Erfindung betrifft ein senkrecht startendes und landendes modulares Fluggerät zum Transport von Personen und/oder Lasten.

Fluggeräte zum Transport von Personen und/oder Lasten gewinnen zunehmend an Bedeutung, da sie eine schnelle Beförderung weitgehend unabhängig von Infrastruktureinrichtungen, wie z. B. Straßen, Schienen, Brücken, Tunnel usw., ermöglichen. Insbesondere trifft dies auf kleinere Fluggeräte zu, die senkrecht starten und landen können und daher keine Start- und Landebahn benötigen.

Aus der WO 2013/124300 A1 ist beispielsweise ein Fluggerät bekannt, dass mehrere in einer Fläche angeordnete Propeller und diesen zugeordnete Elektromotoren aufweist. Die Rotorblätter des Propellers und ihre Blattwurzeln können aus einem Faserverbundwerkstoff, beispielsweise aus mit Kohlefaser verstärktem Kunststoff, bestehen. In einer näher beschriebenen Ausführungsform umfasst das Fluggerät eine Rahmenstruktur aus zugund druckfesten Streben, die an Knotenpunkten unter Ausbildung einer hexagonalen Struktur mit dreieckförmigen Einheitszellen miteinander verbunden sind. Die Propeller sind jeweils an den Knotenpunkten angeordnet.

Das Fluggerät der WO 2013/124300 A1 verfügt über eine Kabine, die ähnlich eines Flugzeugcockpits ausgebildet ist und direkt an der Tragwerksstruktur des Flugmoduls, beispielsweise mittels eines Schwenkgelenks, angeordnet ist.

Auch die DE 10 2013 108 207 A1 offenbart ein Fluggerät, welches modular montiert und demontiert werden kann und zur Bergung von Personen oder Objekten geeignet ist. Das Fluggerät weist ein Zentralmodul auf, an welchem Auslegerarme mit Rotoreinheiten und eine Trageinheit oder Personenbeförderungseinheit anordenbar sind. Dazu wird die Trageinheit oder Personenbeförderungseinheit direkt ohne Abstand mit der Zentraleinheit verbunden.

Darüber hinaus verfügt das Fluggerät der DE 10 2013 108 207 A1 über in einer Ebene angeordnete Rotoren, die jeweils über einen elektrischen Antrieb nebst elektrischer Energieversorgungseinheit und Regelungselektronik verfügen.

DE 202012001750U offenbart ein senkrecht startendes und landendes Fluggerät zum Transport von Personen oder Lasten mit mehreren, in einer Fläche angeordneten Elektromotoren und Propellern.

Die aus dem Stand der Technik bekannten modularen Fluggeräte bergen die Gefahr eines unerwünschten Kontakts der zu transportierenden Person oder Last mit den nahe gelegenen Antriebseinheiten, was ein erhebliches Sicherheitsproblem darstellt. Ferner ist der Zugangsbereich für eine zu transportierende Person zu der Personenbeförderungseinheit durch die Nähe der Antriebseinheiten eingeschränkt.

Zudem ist auch der Sitzkomfort für eine zu transportierende Person eingeschränkt, da die Gestaltung der Personenbeförderungseinheiten stark von den Gegebenheiten der restlichen Komponenten beschränkt wird.

Aufgrund der Nähe zwischen Personenbeförderungseinheit und Antriebseinheiten ist auch von einer erheblichen Lärmbelästigung der zu transportierenden Personen auszugehen.

Der Erfindung liegt die Aufgabe zu Grunde, ein vielfältig einsetzbares modulares senkrecht startendes und landendes Fluggerät anzugeben, das die genannten Nachteile vermeidet oder zumindest mindert. Insbesondere sollen die Sicherheit und der Komfort für die zu transportierenden Personen verbessert werden. Wünschenswert wäre zudem eine Verbesserung der Aerodynamik sowie der Stabilität des Fluggeräts und folglich eine Verbesserung der Betriebssicherheit insgesamt.

Gelöst wird diese Aufgabe durch den Gegenstand des unabhängigen Anspruchs 1. Vorteilhafte Weiterbildungen der Erfindung sind in den abhängigen Ansprüchen 2 bis 14 angegeben.

Das erfindungsgemäße senkrecht startende und landende modulare Fluggerät zum Transport von Personen und/oder Lasten weist ein Flugmodul mit mehreren an einer Tragwerksstruktur angeordneten Antriebseinheiten auf, wobei jede Antriebseinheit einen Elektromotor und wenigstens einen mit dem Elektromotor in Wirkverbindung stehenden Propeller aufweist.

Bei dem Fluggerät handelt es sich um ein sog. VTOL (engl. Vertical Take-Off and Landing) Fluggerät. Das Flugmodul dient dem Antrieb des Fluggeräts.

Die Antriebseinheiten können optional in einer oder mehreren Ebenen angeordnet sein, wie zum Beispiel in einer Ebene der Tragwerkstruktur und / oder oberhalb und /oder unterhalb der Tragwerksstruktur.

Zudem können mehrere Antriebseinheiten koaxial zur Rotorwelle der Elektromotoren übereinander angeordnet sein.

Die Tragwerksstruktur kann radial, axial und tangential angeordnete, vorzugweise gerade oder gekrümmte Tragwerksbalken aufweisen, die beispielsweise mittels der Tragwerksstruktur zugeordneten Verbindungsstücken, z. B. T-Stücken, an Knotenwerksstruktur angeordneten Zentraleinheit verbunden sein können.

Die miteinander verbundenen Tragwerksbalken bilden vorzugsweise eine in sich geschlossene Tragwerksstruktur, d. h. ohne frei endende Tragwerksbalken, die damit besonders steif ist.

Die Tragwerksbalken können beispielsweise so angeordnet sein, dass eine ebene, hexagonal verstrebte Tragwerksstruktur ausgebildet ist. Dazu können sechs radial gleichmäßig verteilt angeordnete Tragwerksbalken vorgesehen sein, so dass zwei benachbarte radial angeordnete Tragwerksbalken einen Winkel von ungefähr 60 ° einschließen.

Die Verbindungsstücke können bevorzugt so ausgebildet sein, dass ein flächig anliegender, bündiger Sitz der Tragwerksbalken im Verbindungsstück ermöglicht wird. Besonders bevorzugt kann ein Ausleger des Verbindungsstücks den Tragwerksbalken in der Art einer Steckverbindung vollständig umschließen. Ein derartiger Sitz ermöglicht eine gezielte Ausrichtung sowie eine flächige Verteilung der Lagerkräfte.

Zur Ausbildung einer ebenen, hexagonalen Form der Tragwerksstruktur können drei Ausleger des Verbindungsstücks in einer Ebene angeordnet sein, wobei der Winkel zwischen den Auslegern ca. 60 ° beträgt. Die Verbindungsstücke können aus einer Oberund einer Unterschale gebildet sein, um die Montage und Wartung zu vereinfachen.

Zur Steigerung der Festigkeit der Verbindung können die Tragwerksbalken innerhalb der Verbindungsstücke untereinander formschlüssig verbunden sein. Die Enden der Tragwerksbalken können so ausgebildet sein, dass diese ineinander gesteckt werden können.

Die Propeller können zwei oder mehr Rotorblätter aufweisen, welche mit ihren Blattwurzeln an einer Nabe befestigt sind. Die Rotorblätter sind so geformt und ausgerichtet, dass sie bei einer Rotationsbewegung des Propellers von der Umgebungsluft asymmetrisch umströmt werden, so dass eine Auftriebswirkung des Fluggeräts erzeugt wird. Die Auftriebswirkung des Fluggeräts kann veränderbar ausgeführt sein, wobei die Propeller über eine feste oder richtungsverstellbare Welle zur Einstellung des Neigungswinkels der Propeller verfügen können und ebenso die Rotorblätter über eine feste oder verstellbare Achse zur Einstellung derer Anstellwinkel verfügen können.

Jedem Elektromotor kann ein oder mehrere Propeller zugeordnet sein, wobei der Elektromotor mit dem /die Propeller in einer Wirkverbindung steht, d. h. den /die Propeller antreibt. Dazu können Propeller und zugehöriger Elektromotor miteinander verschraubt sein.

Einem Elektromotor können mehrere koaxial zur Rotorwelle angeordnete Propeller zugeordnet sein, welche oberhalb und /oder unterhalb des Elektromotors angeordnet sein können.

Die Elektromotoren können als bürstenlose Gleichstrommotoren ausgebildet sein. Derartige Motoren zeichnen sich durch einen geringen Wartungsaufwand aus. Zudem kann jede Antriebseinheit einen Motorcontroller aufweisen, so dass jede Antriebseinheit unabhängig von den anderen Antriebseinheiten gesteuert werden kann.

Zur Abdichtung, z. B. gegenüber Wasser oder Schmutz, und/oder zur Reduzierung des aerodynamischen Widerstands kann an jeder Antriebseinheit eine Abdeckung angeordnet sein, z. B. in Form eines sog. Spinners zur stromlinienförmigen Verkleidung der Nabe.

Beispielsweise kann das Flugmodul in der hexagonalen Ausführung der Tragwerksstruktur insgesamt 18 Antriebseinheiten aufweisen.

Das Flugmodul oder die einzelnen Propeller können ohne Ummantelung oder mit einer Ummantelung ausgeführt sein. Die Ummantelung kann beispielsweise als Schutzgitter ausgeführt sein. Eine Ummantelung erhöht die Sicherheit für Bodenpersonal und Passagiere, da ein unbeabsichtigter Kontakt mit den Rotorblättern vermieden wird. Die Ausführung ohne Ummantelung hat den Vorteil eines geringeren Gewichts des Flugmoduls und vereinfacht die Wartung der Propeller.

Eine Anzahl der Antriebseinheiten, beispielsweise einige oder alle Antriebseinheiten, können mittels kraft- und/oder formschlüssiger Befestigungsmittel mit der Tragwerksstruktur, vorzugsweise mit den Tragwerksbalken verbunden sein.

Bevorzugt ist das Befestigungsmittel als eine Schelle ausgebildet, die einen Tragwerksbalken zumindest teilweise umschließt.

Beispielsweise kann die Schelle derart ausgebildet sein, dass sie das Hohlprofil des Tragwerkbalkens bündig umfasst, d. h. die Form der Schelle der Außenkontur des Balkens folgt.

Zur Steigerung der Stabilität und Steifigkeit kann die Schelle einen Omega-förmigen Querschnitt aufweisen, so dass das Drehmoment der Antriebseinheiten sowie Biege- und Schwingbelastungen ausgeglichen werden können.

Die Schelle kann mit dem Tragwerksbalken verschraubt, verklebt, vernietet sein oder mittels Klemmverbindung durch Verspannen mit dem Tragwerksbalken verbunden sein.

Die Schellen können über einen einseitig abgewinkelten Bereich zur Aufnahme der Antriebseinheiten verfügen. In diesem Bereich kann die Schelle kann mittels einer Schraub- oder Nietverbindung mit der Antriebseinheit verbunden werden.

Durch den Kraft- und/oder Formschluss kann eine verbesserte Positionierung der Antriebseinheiten an der Tragwerksstruktur sowie eine verbesserte Kraftübertragung von den Antriebseinheiten auf die Tragwerksstruktur ermöglicht werden.

Das Befestigungsmittel, z. B. die Schelle, kann zur Vereinfachung der Montage und Demontage mehrteilig, vorzugsweise zweiteilig, ausgebildet sein.

Weiterhin weist das erfindungsgemäße Fluggerät ein Transportmodul mit einer Beförderungskapsel, welche der Umhüllung der zu transportierenden Personen und/oder Lasten dient, und mit einer Verbindungseinrichtung zur Verbindung der Beförderungskapsel mit dem Flugmodul auf. Die Verbindungseinrichtung weist einen längserstreckten Schaft auf, der einen Endes an die Beförderungskapsel anschließt, wobei die Verbindungseinrichtung lösbar mit der Beförderungskapsel verbunden sein ist.

Der Schaft kann beispielsweise als eine gerade verlaufende Stange mit z. B. einem rechteckigen Querschnitt mit über den Umfang der Stange gerundeten Kanten oder mit einem rundem oder ovalen Stangen-Querschnitt, ausgebildet sein.

Der Schaft kann vorzugsweise im Wesentlichen rotationssymmetrisch ausgebildet sein, also beispielsweise die Form eines geraden Kreiszylinders, aufweisen, wobei die Längserstreckung des Zylinders der Länge des Schaftes entspricht und die Grundund Deckfläche des Zylinders auch als Schmalseite bezeichnet sein können.

Bevorzugt kann der Schaft möglichst dünn sein, z. B. einen geringen Durchmesser aufweisen. Eine möglichst dünne und rotationssymmetrische Ausführung des Schafts verringert die Masse und den Luftwiderstand des Schaftes und damit des Transportmoduls deutlich.

Erfindungsgemäß schließt der Schaft einen Endes an die Beförderungskapsel an, welche der Umhüllung der zu transportierenden Personen und/oder Lasten dient.

Die Beförderungskapsel ist derart geformt, dass sie in die Schmalseite des längserstreckten Schafts mündet. Die Schmalseite des Schaftes kann zur Verbesserung der Aerodynamik bevorzugt achsmittig bezüglich der Beförderungskapsel angeordnet sein. Durch die achsmittige Anordnung des Schaftes in Bezug zur Beförderungskapsel wird die Biegebelastung des Schaftes z.B. beim An- und Abkuppeln des Flugmoduls oder beim Landen des Fluggerätes minimiert.

Bevorzugt kann die Verbindung zwischen Beförderungskapsel und Schaft starr ausgebildet sein. Beispielsweise können Beförderungskapsel und Schaft miteinander stoffschlüssig verbunden, z. B. verschweißt sein.

Durch die Ausbildung eines längserstreckten Schaftes und der Befestigung der Beförderungskapsel an diesem Schaft kann vorteilhaft die Einhaltung eines bestimmten Abstands zwischen Beförderungskapsel und Flugmodul erreicht werden.

Insbesondere kann der Schaft derart erstreckt ausgebildet sein, dass ein Sicherheitshöhenabstand der Kupplungseinrichtung oberhalb der Beförderungskapsel hergestellt ist, so dass ein entsprechender Sicherheitsabstand zwischen der Beförderungskapsel und dem Flugmodul im gekuppelten Zustand gewährleistet werden kann. Der Sicherheitshöhenabstand kann der Längserstreckung des Schafts entsprechen und ist derart bestimmt, dass eine das Transportmodul benutzende erwachsene Person aus dem Stand die Kupplungseinrichtung und das gekuppelte Flugmodul nicht berühren kann. Der Sicherheitshöhenabstand kann - ausgehend von einer nutzbaren Höhe der Beförderungskapsel von beispielsweise 2 m - mindestens 0,5 m, bevorzugt 1,0 m und weiter bevorzugt 1,5 m betragen.

Der Sicherheitshöhenabstand ist derart gewählt, dass ein Sicherheitsrisiko für das Transportmodul benutzende Personen minimiert wird, indem z. B. ein Kontakt einer solchen Person mit dem angekuppelten Flugmodul bei Benutzung des Transportmoduls vermieden wird.

Die Längserstreckung des Schaftes und die Höhe der Beförderungskapsel können somit in Summe beispielsweise mindestens eine Höhe von 2,5 m über einer Aufstellfläche der Beförderungskapsel betragen. Damit ist die Kupplungseinrichtung und das gekuppelte Flugmodul zumindest oberhalb der möglichen Greifhöhe einer in Nähe der Beförderungskapsel stehenden, erwachsenen Personen angeordnet.

Dadurch kann die Gebrauchssicherheit deutlich erhöht werden, indem ein unerwünschter Kontakt zwischen der agierenden oder zu befördernden Person und/oder Last und dem Flugmodul effektiv vermieden werden kann. Zudem trägt die Einhaltung eines bestimmten Abstands zur Verringerung der Lärmbelästigung für die zu befördernden Personen bei.

Außerdem kann durch die beabstandete Anordnung der Beförderungskapsel von dem Flugmodul die Beförderungskapsel außerhalb des Abwindes der Propeller des Flugmoduls platziert sein, was zu einer Verringerung des Luftwiderstand und einer Verbesserung der Aerodynamik führt.

Des Weiteren kann die konkrete Ausgestaltung der Beförderungskapsel weitgehend unabhängig vom Flugmodul erfolgen, da keine Anpassung bezüglich des Flugmoduls erforderlich ist.

Das Fluggerät kann optional über eine Ständereinrichtung verfügen, die dazu ausgebildet ist, ein sicheres Positionieren des gelandeten Fluggerätes auf einer Stellfläche, z. B. dem Erdboden, zu ermöglichen. Die Ständereinrichtung kann ein- und ausklappbar ausgebildet sein, so dass die Ständereinrichtung während des Fluges angeklappt werden kann, um das aerodynamische Verhalten des Fluggeräts zu verbessern. Die Ständereinrichtung kann am Transportmodul, vorzugsweise an der Beförderungskapsel, und/oder am Flugmodul angeordnet sein. Ist die Ständereinrichtung ein- und ausklappbar ausgebildet, so kann die Ständereinrichtung während des Fluges nahe an das Transportmodul und/oder nahe an das Flugmodul angeklappt werden. Die Ständereinrichtung kann z. B. aus Metall, Kunststoff und/oder einem Faserverbundwerkstoff gefertigt sein.

Darüber hinaus weist das erfindungsgemäße Fluggerät eine Kupplungseinrichtung zur Verbindung des Flugmoduls mit einem anderen Ende des längserstreckten Schafts des Transportmoduls auf, wobei ein erster Teil der Kupplungseinrichtung am Flugmodul und ein zweiter Teil der Kupplungseinrichtung als Gegenstück am anderen Ende des längserstreckten Schafts des Transportmoduls ausgebildet ist.

Unter dem anderen Ende des längserstreckten Schafts ist dabei das der Beförderungskapsel gegenüberliegende Ende gemeint. Mit anderen Worten kann die Kupplungseinrichtung die zweite der beiden Schmalseiten des Schaftes mit dem Flugmodul verbinden. Die Kupplungseinrichtung ist zum An- und Abkuppeln eines Flugmoduls ausgebildet, die damit eine lösbare Verbindung des Schaftes mit einem Flugmodul realisiert. Die Kupplungseinrichtung kann zur Verbesserung der Aerodynamik das Flugmodul und das Transportmodul bevorzugt mittig, d. h. achsmittig des Schaftes und/oder mittig bezüglich der Tragwerksstruktur oder mittig an einer Zentraleinheit des Flugmoduls, verbinden. Durch diese achsmittige Anordnung wird auch die Biegebelastung des Schaftes z.B. beim An- und Abkuppeln des Flugmoduls oder beim Landen des Fluggerätes minimiert.

Die Kupplungseinrichtung ist als selbsttätige, d. h. automatische Kupplungseinrichtung ausgebildet. Dadurch ist ein Kuppeln des Flugmoduls mit dem Transportmodul automatisiert möglich. Der Kupplungsvorgang kann zügig und sicher durchgeführt werden, da sich ein manuelles Kuppeln erübrigt. Die Kupplungseinrichtung kann steuerbar ausgebildet sein. Dies kann vorteilhaft eine Fernsteuerung des Kupplungsvorgangs ermöglichen. Zudem kann das An- oder Abkuppeln abhängig von verschiedenen Bedingungen durchgeführt werden. Beispielsweise kann ein Abkuppeln nur möglich sein, falls die Beförderungskapsel Bodenkontakt hat. Dies kann zu einer Erhöhung der Sicherheit beitragen.

Die Kupplungseinrichtung kann als Gelenkkupplung ausgebildet sein, so dass das Transportmodul richtungsflexibel mit dem Flugmodul gekuppelt werden und eine Winkel- bzw. Neigungseinstellung zwischen Flug- und Transportmodul in den verschiedenen Betriebszuständen realisiert werden kann.

Mit anderen Worten kann ein Neigungswinkel α des Flugmoduls variierbar sein. Der Neigungswinkel α ist als derjenige Winkel definiert, der von einer Schwerkraftlinie, die senkrecht zur Erdoberfläche verläuft, und der Ebene E der Tragwerksstruktur eingeschlossen wird. Die Schwerkraftlinie entspricht einer Längsachse des Schafts des Transportmoduls, wenn das Transportmodul in vertikaler Ausrichtung an dem Flugmodul angeordnet ist.

Der Neigungswinkel α kann beispielsweise zwischen 30° und 150° variierbar sein. Bei einem Neigungswinkel α von 90° ist die Ebene der Tragwerksstruktur des Flugmoduls senkrecht zur Schwerkraftlinie und folglich parallel zur Erdoberfläche angeordnet. In diesem Zustand kann die Schwerkraftlinie genau der Mittelachse des Flugmoduls entsprechen. Bei Beschleunigung des Flugmoduls kann die Ebene E der Tragwerksstruktur in Flugrichtung nach unten geneigt werden, d. h. es wird ein Neigungswinkel α < 90° eingestellt. Beim Abbremsen des Flugmoduls kann die Ebene E der Tragwerksstruktur in Flugrichtung nach oben geneigt werden, d. h. es wird ein Neigungswinkel α > 90° eingestellt.

Damit kann auch der Neigungswinkel des Transportmoduls bezüglich des Flugmoduls derart variiert werden, dass beispielsweise im Flugbetrieb stets eine komfortable vertikale Ausrichtung des Transportmoduls in Richtung der Schwerkraftlinie auch bei einer abweichenden Steuereingabe für die Neigung des Flugmoduls gewährleistet werden kann. Die Variabilität des Neigungswinkels des Transportmoduls gegenüber dem Flugmodul, so dass bei beliebiger Neigung des Flugmoduls eine im Wesentlichen vertikale Ausrichtung des Transportmoduls in Richtung der Schwerkraftlinie erfolgt, kann das Flugerlebnis für die zu transportierenden Personen verbessern und die Fixierung von Lasten in der Beförderungskapsel entbehrlich machen oder die Fixierung zumindest vereinfachen.

Zudem kann der Schwerpunkt des Fluggeräts in einem zentralen Bereich des Flugmoduls zentriert werden, so dass die Steuerund Regelfähigkeit des Fluggeräts verbessert sein kann.

Die Kupplungseinrichtung kann derart ausgebildet sein, dass die Neigung der Kupplungsverbindung, also die Neigung des Transportmoduls bezüglich des Flugmoduls, auch während des Flugbetriebes justierbar ist und/oder durch Momentenausgleich selbsttätig einstellbar ist, z. B. indem die Masse des Transportmoduls, insbesondere die Masse der Beförderungskapsel, um einen Punkt der Kupplungseinrichtung, die im geschlossenen Zustand ein Loslager ausbildet, pendelt.

Zudem kann während des Fluges der Schwerpunkt des Fluggeräts in einem zentralen Bereich in Bezug auf das Flugmodul zentriert werden, so dass die Steuer- und Regelfähigkeit des Fluggerätes verbessert sein kann. Ein durch die zu transportierenden Personen und/oder Lasten erzeugtes Moment kann durch die Ausführung als Gelenkkupplung trotz des durch den Schaft gegebenen Abstands der Beförderungskapsel zur Kupplungseinrichtung leicht ausgeglichen werden.

Die Kupplungseinrichtung kann bevorzugt so ausgebildet sein, dass die korrekte Ankupplung des Flugmoduls unter jeglicher Nutzungsbelastung stets gewährleistet ist. Des Weiteren kann sie über einen Kontrollmechanismus zum Bestätigen einer ordnungsgemäßen Verbindung sowie über einen Sicherheitsmechanismus zum manuellen Lösen der Verbindung im unbelasteten Zustand verfügen. Die Kupplungseinrichtung kann über eine Dämpfungseinrichtung verfügen, die beispielsweise zum Abfedern harter Landestöße ausgebildet sein kann.

Die Kupplungseinrichtung ermöglicht eine flexible Kombination von Transport- und Flugmodulen. Mit anderen Worten können verschiedenartige Transport- und/oder Flugmodule gegeneinander ausgetauscht werden. Durch eine selbsttätige Kupplungseinrichtung ist diese Flexibilität noch erhöht.

Beispielsweise können verschiedene Transportmodule an dasselbe Flugmodul gekuppelt werden, wobei die Transportmodule unterschiedlich ausgebildet sein können. Beispielsweise kann ein erstes Transportmodul zum Transport von Personen ausgebildet sein, während ein zweites Transportmodul zum Lastentransport ausgebildet ist. Ebenso können unterschiedliche Flugmodule an dasselbe Transportmodul 7 gekuppelt werden. Die Transportmodule können sich beispielsweise in der Anzahl und/oder Anordnung der Antriebseinheiten voneinander unterscheiden. So können z. B. in Abhängigkeit der zu transportierenden Last und/oder der Flugbedingungen (Windstärke und -richtung, Höhenlage etc.) Flugmodule mit mehr oder weniger Antriebseinheiten ausgewählt werden.

Das Gesamtgewicht des Fluggeräts 1 ist in der Ausführungsform in Anlehnung an die Zulassungsvorschrift für Ultraleicht-Fluggeräte bevorzugt geringer als 472,5 kg (mit Rettungssystem), weiter bevorzugt geringer als 450 kg (ohne Rettungssystem), um die Materialbelastung gering zu halten und eine Gefährdung bei einem etwaigen Absturz durch eine zu hohe Aufprallenergie zu minimieren. Bevorzugt beträgt die Nutzlast mindestens 150 kg, um auch den Transport von übergewichtigen Personen zu ermöglichen.

Durch eine optimierte Gestaltung der Tragwerksstruktur und der platzoptimierten Anordnung der Antriebseinheiten sind die Abmessungen des Fluggeräts geringer als 8 m im Durchmesser, so dass eine platzsparende Aufbewahrung des Fluggerätes ermöglicht und durch das Fluggerät auch Flugkorridore geringer Abmessungen benutzt werden können.

Eine maximale Schwebeflugleistung kann je Propeller 5 kW, die maximale Gesamtleistung im Schwebeflug 60 kW betragen. Die Reichweite kann beispielsweise mindestens 30 km und die minimale Reisegeschwindigkeit 60 km/h betragen. Die Geräuschemission sollte 60 db(A), insbesondere in der Beförderungskapsel, nicht überschreiten. Ggf. kann die Beförderungskapsel mit einer Schallisolierung ausgestattet sein. Zur Erhöhung der Sicherheit kann das Fluggerät über ein Blitzschutzsystem verfügen. Beispielsweise kann die Beförderungskapsel so elektrisch leitend ausgebildet sein, dass sie einen Faraday'schen Käfig darstellt. Beispielsweise kann die Beförderungskapsel mit einer elektrisch leitenden Beschichtung versehen sein.

Das modulare Fluggerät verbindet vorteilhaft Ultraleichtbau und Elektromobilität, so dass der Transport von Personen und/oder Lasten umweltschonend, sicher und zügig erfolgen kann. Insbesondere lässt sich das modulare Fluggerät einfach in bestehende urbane Strukturen integrieren, da es sich durch einen geringen Platzbedarf auszeichnet und je nach Ausgestaltung auch energieautark betrieben werden kann.

Optional kann unterhalb des Flugmoduls eine Vorrichtung zum gezielten Ablenken des Abluftstroms der Propeller angeordnet sein, um den Luftwiderstand des Transportmoduls zu verringern und/oder einen besseren Schub- und/oder Vortrieb zu erzeugen.

Gemäß verschiedenen Ausführungsvarianten können zur Steigerung der Effizienz des Fluggerätes sowie zur Stabilisierung und/oder Verbesserung der Strömungseigenschaften sowohl im Steig- und Sinkflug als auch im Reiseflug (Vorwärtsflug) ein oder mehrere Luftleiteinrichtungen als Auftriebs- und Flughilfsmittel vorgesehen sein.

Die Luftleiteinrichtungen können vorzugsweise am Flugmodul und / oder am Transportmodul, vorzugsweise die Beförderungskapsel, stationär oder beweglich angeordnet sein. Die Luftleiteinrichtungen können flügelartig, beispielsweise plattenförmig oder leicht gewölbt, ausgebildet sein. Optional kann die Position der Luftleiteinrichtungen gegenüber dem Flugmodul und/oder dem Transportmodul bzw. der Beförderungskapsel drehbeweglich oder linear verfahrbar ausgebildet sein.

In einer Ausführungsvariante kann eine flügelartige, im Wesentlichen parallel zur Längserstreckung des Schaftes senkrecht orientierte ebene Platte als Luftleiteinrichtung an einer der Flugrichtung des Fluggeräts entgegengesetzten Rückseite des Transportmoduls angeordnet sein. Eine derartig ausgebildete Luftleiteinrichtung kann als beispielsweise als Seiten-Leitwerk des Fluggeräts fungieren, welches das Transportmodul seitwärts lenkt und während des Fluges des Fluggerätes in stabiler Lage gegenüber seiner Hoch- bzw. Längsachse des Schaftes hält.

In einer weiteren Ausführungsform können ein oder mehrere Luftleiteinrichtungen im unteren Bereich der Beförderungskapsel angeordnet und z. B. mittels Befestigungsbügeln befestigt sein. Die Befestigungsbügel können der Form des unteren Bereichs der Beförderungskapsel folgen.

Die Befestigungsbügel können an der Beförderungskapsel und die Luftleiteinrichtungen an je einem Befestigungsbügel drehbar gelagert angeordnet sein. Hiermit können die Luftleiteinrichtungen je nach Bedarf eng an die Beförderungskapsel angeklappt oder weit von dieser abgeklappt werden.

Bei Start und Landung des Fluggerätes können die Luftleiteinrichtungen an die Beförderungskapsel angeklappt werden, um möglichst keine negative Beeinflussung des Luftstromes zu generieren. Während des Reisefluges (Vorwärtsfluges) des Fluggerätes mit dem angekoppelten Transportmodul können die Luftleiteinrichtungen ausgeklappt werden und helfen aufgrund ihres aerodynamischen Auftriebes, das Transportmodul zu tragen. Das Flugmodul muss folglich weniger Tragarbeit leisten und kann mehr Leistung für den Vorwärtsflug aufbringen.

In einer weiteren Ausführungsform können ein oder mehrere Luftleiteinrichtungen an den Tragwerksbalken der Tragwerksstruktur des Flugmoduls oder an den Verbindungsstücken zur Verbindung der Tragwerksbalken der Tragwerksstruktur befestigt sein. Die Luftleiteinrichtungen können flügelartig, beispielsweise plattenförmig oder leicht gewölbt, ausgebildet sein.

Optional kann die Position der Luftleiteinrichtungen gegenüber dem Flugmodul drehbeweglich oder linear verfahrbar ausgebildet sein. Beispielsweise können die flügelartigen Luftleiteinrichtungen an die Tragwerksstruktur angeklappt und von dieser abgeklappt werden und/oder um ihre Längsachse drehbar gelagert sein.

Diese Luftleiteinrichtungen können die Auftriebswirkung des Flugmoduls unterstützen und können im weiteren als Lenk- und Flughilfsmittel für das Flugmodul dienen. Dies erhöht die Effizienz des Flugmoduls und kann zur Stabilisierung und/oder Verbesserung der Strömungseigenschaften des Flugmoduls und damit der Steuerbarkeit des Fluggerätes führen.

Die Lufteinrichtungen der vorstehend beschriebenen Ausführungsformen können zumindest teilweise in ihrer Ausrichtung zum Transportmoduls und/oder zur Tragwerkstruktur des Flugmoduls steuerbar einstellbar ausgebildet sein, insbesondere mit einem Anstellwinkel β gegenüber dem Transportmodul und / oder gegenüber der Tragwerkstruktur des Flugmoduls variabel ausrichtbar sein, so dass ihre Auftriebs- bzw. Lenkfunktion während des Flugbetriebes des Fluggerätes optimal an die Strömungsverhältnisse etc. angepasst werden kann.

Insbesondere können die an der Tragwerksstruktur befestigten, um ihre Längsachse drehbar gelagerten Luftleiteinrichtungen, jeweils in einem Anstellwinkel β, der zwischen der Ebene E der Tragwerksstruktur und einer mittleren Querschnittsebene der Luftleiteinrichtung eingeschlossen ist, variierbar sein. Bevorzugt kann der Anstellwinkel β in einem Bereich zwischen 110° (in Flugrichtung weisender Flügelabschnitt der Luftleiteinrichtung steil nach oben angestellt) und 260 ° (entgegen der Flugrichtung weisender Flügelabschnitt der Luftleiteinrichtung steil nach oben angestellt) variierbar sein. Bei einem Anstellwinkel β von 180° liegen die Luftleiteinrichtungen und die Tragwerksstruktur in einer Ebene. Bei mehreren Luftleiteinrichtungen können die jeweiligen Anstellwinkel β unabhängig voneinander variierbar sein.

Durch die Variation des Anstellwinkels β kann beispielsweise die Auftriebsfunktion des Flugmoduls entsprechend der Strömungsverhältnisse beeinflusst werden. Werden die Luftleiteinrichtungen mit jeweils verschieden großen Anstellwinkeln β ausgerichtet, kann beispielsweise die Lenkfunktion des Flugmoduls beeinflusst werden.

In einer Ausführungsvariante kann der Anstellwinkel β in Abhängigkeit des Neigungswinkels α variierbar sein. Bei Neigung des Flugmoduls gegenüber der Schwerkraftlinie S kann durch geeignete Variation des Anstellwinkels β ein durch die Neigung des Flugmoduls verringerter Auftrieb wieder erhöht werden. Bei Beschleunigung des Flugmoduls mit in Flugrichtung nach unten geneigter Ebene E der Tragwerksstruktur (α < 90°) können hierzu die Luftleiteinrichtungen gegenläufig, d. h. mit einem Anstellwinkel β größer 90 ° und kleiner 180 °, angestellt werden. Beim Abbremsen des Flugmoduls mit in Flugrichtung nach oben geneigter Ebene E der Tragwerksstruktur (α > 90°) können die Luftleiteinrichtungen hierzu gegenläufig, d. h. mit einem Anstellwinkel β größer 180 ° und kleiner 270 °, angestellt werden.

Mit derartigen Auftriebshilfen kann nicht nur der Auftrieb des Flugmoduls verbessert und damit die Propellerleistung reduziert und Energie eingespart werden, sondern u. a. auch die Steuerbarkeit und Flugstabilität des Fluggerätes verbessert werden.

Gemäß verschiedenen Ausführungsvarianten kann das Flugmodul eine Zentraleinheit aufweisen, die bevorzugt mittig zu einer Mittelachse bzw. Symmetrieachse des Flugmoduls angeordnet sein kann. Die Zentraleinheit kann beispielsweise ein Gehäuse, z. B. in Form einer Halbkugel oder eines Ellipsoids, aufweisen. Beispielsweise kann die Zentraleinheit aus zwei miteinander verbundenen, z. B. verschraubten, Hälften ausgebildet sein. Zur Wartung und Durchführung kleinerer Reparaturen können Eingriffe vorgesehen sein. Die Zentraleinheit kann zudem zur Aufnahme von Tragwerksbalken der Tragwerksstruktur ausgebildet sein, z. B. indem Tragwerksbalken der Tragwerksstruktur mit einem Ende an der Zentraleinheit befestigt sind und von der Zentraleinheit radial nach außen verlaufen.

Die Zentraleinheit kann beispielsweise zur Aufbewahrung oder zur Anordnung von Gegenständen, wie z. B. Hilfsmitteln oder technische Funktionseinheiten, ausgebildet sein. Beispielsweise kann die Zentraleinheit ein Rettungssystem, z. B. einen Fallschirm zum Herausschießen, im obersten Teil der Zentraleinheit aufweisen.

Die Zentraleinheit kann technische Funktionseinheiten, wie z. B. Steuerungs-, Lagebestimmungs- und/oder Kommunikationstechnik und/oder ein Lademodul aufweisen.

Zur Aufbewahrung oder Anordnung der Hilfsmittel und/oder technischen Funktionseinheiten kann das Gehäuse der Zentraleinheit einen oder mehrere Hohlräume aufweisen. Die Hilfsmittel oder technischen Funktionseinheiten können in den Hohlräumen und/oder an dem Gehäuse, beispielsweise oberseitig oder seitlich im Freiraum zwischen den radialen Tragwerksbalken, angeordnet sein.

Die integrierte Lagebestimmungstechnik kann beispielsweise mittels Ortungssignalen, z. B. eines globalen Navigationssatellitensystems wie GPS, Galileo, GLONASS, Beidou etc., zur Positionsbestimmung des Fluggeräts ausgebildet sein und der Ermittlung und Kontrolle der Flugroute und des Flugziels des Fluggerätes dienen.

Die integrierte Kommunikationstechnik kann zur internen und/oder externen Kommunikation ausgebildet sein, wobei unter interner Kommunikation die Kommunikation zwischen den Modulen des Fluggeräts oder die Kommunikation mit Modulen, die direkt zur Verwendung mit dem Fluggerät vorgesehen sind, zu verstehen ist, also beispielsweise die Kommunikation zur Verständigung zwischen Flug- und Transportmodul oder Fluggerät und Bodenkontrollstation.

Unter externer Kommunikation ist beispielsweise die Kommunikation bezüglich Flugerlaubnis, Flugroute, Standort etc. bei der Flugsicherung oder der Informationsaustausch mit Wetterdiensten zu verstehen.

Darüber hinaus kann die Zentraleinheit auch Soft- und/oder Hardware für die Durchführung eines Landeanflugs auf eine Start- und Landestation aufweisen.

Durch die Positionierung von Hilfsmitteln und technischen Funktionselementen in oder an der mittig angeordneten Zentraleinheit kann eine Schwerpunktlage konzentriert im Zentrum des Fluggeräts ermöglicht werden, wodurch die Steuer- und Regelfähigkeit des Fluggeräts verbessert ist.

Gemäß verschiedenen Ausführungsvarianten können das Flugmodul, z. B. die Zentraleinheit des Flugmoduls, und/oder das Transportmodul, vorzugsweise die Beförderungskapsel ein Lademodul aufweisen.

Das Lademodul kann ein oder mehrere wiederaufladbare Energiespeicher, z. B. in Form von wiederaufladbaren Akkumulatoren oder Superkondensatoren, eine Ladeeinrichtung und/oder Solarzellen aufweisen.

Die Ladeeinrichtung kann zur Übertragung von elektrischer Energie von einer externen Ladestation in den/die Energiespeicher ausgebildet sein.

Die Energiespeicher können zur Speicherung der übertragenen und/oder mittels der Solarzellen eigenerzeugten elektrischen Energie und zur Energieversorgung des Transportmoduls und/oder des Flugmoduls, z. B. der Antriebseinheiten, ausgebildet sein.

Hierdurch können das Transportmodul und/oder das Flugmodul energetisch autark ausgebildet werden, da die Stromversorgung innerhalb des Transportmoduls bzw. Flugmoduls selbst erfolgen kann.

Sofern sowohl das Transportmodul als auch das Flugmodul über eine Eigenstromversorgung verfügen, ist eine stromleitende Verbindung über die Verbindungseinrichtung entbehrlich.

Die wiederaufladbaren Energiespeicher können beispielsweise in und/oder an der Beförderungskapsel und/oder in und/oder an einer Zentraleinheit des Flugmoduls angeordnet sein, während die Solarzellen an der äußeren Oberfläche der Beförderungskapsel und/oder an der Tragwerksstruktur des Flugmoduls befestigt sein können.

Gemäß verschiedenen Ausführungsvarianten kann die Tragwerksstruktur des Flugmoduls an Knotenpunkten miteinander verbundene Tragwerksbalken aufweisen und eine Anzahl der Antriebseinheiten kann außerhalb der Knotenpunkte angeordnet sein.

Die Anordnung einer Anzahl der Antriebseinheiten, d. h. einiger oder aller Antriebseinheiten, außerhalb der Knotenpunkte bewirkt eine verbesserte Stabilität des Flugmoduls, da hierdurch die Antriebskräfte außerhalb der Knotenpunkte in die Tragstruktur eingeleitet werden. Auf diese Weise werden die Knotenpunkte, welche bereits hohe Belastungen aus den Tragwerksbalken erfahren, nicht zusätzlich durch die Antriebskräfte beansprucht.

Dadurch kann die Tragwerksstruktur mit weniger Material, d. h. leichter hinsichtlich der Masse und kostengünstiger hinsichtlich Herstellung ausgeführt werden.

Die Anordnung der erforderlichen Antriebseinheiten außerhalb der Knotenpunkte führt außerdem zu einer Minimierung der notwendigen Tragwerksbalken und Knotenpunkte, was die Tragwerksstruktur vereinfacht und damit kostengünstiger macht.

Die minimierte Konstruktion der Tragwerksstruktur sorgt zudem einerseits für eine geringere Masse und erzeugt andererseits eine geringere Abdeckung der Abwindfläche der Propeller, was jeweils den Wirkungsgrad des Flugmoduls verbessert und damit den Kraftstoffverbrauch bei der Benutzung des Fluggerätes mindert.

Zudem führt eine solche Ausführung zu einer höheren Funktionssicherheit und damit zu einer verbesserten Betriebssicherheit des Flugmoduls und damit des Fluggerätes.

Gemäß verschiedenen Ausführungsvarianten kann vorgesehen sein, dass eine Anzahl der Antriebseinheiten, d. h. einige oder alle Antriebseinheiten, konzentrisch um eine Mittelachse bzw. Symmetrieachse des Flugmoduls angeordnet sind. Mit anderen Worten können die Antriebseinheiten symmetrisch um eine gemeinsame Mitte mit der Mittelachse des Flugmoduls und in einer oder in mehreren Ebenen verteilt angeordnet sein. Hierdurch und im Weiteren auch durch die im Flugmodul mittig angeordnete Zentraleinheit kann eine stabile Flugeigenschaft des Fluggeräts erreicht werden.

Beispielsweise kann eine Anzahl der Antriebseinheiten in einem identischen radialen Abstand (Radius) von der Mittelachse des Flugmoduls und damit ringförmig (in einem Ring) um die Mittelachse des Flugmoduls angeordnet sein.

Vorzugsweise ist unter dem radialen Abstand die Entfernung zwischen der Mittelachse des Flugmoduls und der Nabenachse des jeweiligen Propellers der Antriebseinheit zu verstehen.

Die Anzahl der Antriebseinheiten mit identischem radialem Abstand von der Mittelachse des Flugmoduls bilden in einer gedachten kreisbogenförmigen Verbindungslinie mit gleichbleibendem Radius einen Ring.

Die Antriebseinheiten können auch in mehreren Ringen mit identischem Radius bzw. Ringdurchmesser auf mehreren Ebenen um die Mittelachse angeordnet sein.

Die Antriebseinheiten können in mehreren Ringen (R1, R2, R3) mit unterschiedlichem Radius bzw. Ringdurchmesser (DR1, DR2, DR3) in einer Ebene um die Mittelachse des Flugmoduls angeordnet sein.

Durch die Anordnung einer Anzahl der Antriebseinheiten insbesondere in einem oder mehreren Ringen kann beispielsweise eine erste Gruppe von Antriebseinheiten einen ersten, identischen radialen Abstand von der Mittelachse des Flugmoduls aufweisen und einen ersten Ring (R1) bilden. Eine zweite Gruppe von Antriebseinheiten kann einen zweiten, identischen radialen Abstand von der Mittelachse aufweisen und einen zweiten Ring (R2) bilden und so weiter.

Ein dritter Ring (R3) mit dem größten Abstand der Antriebseinheiten von der Mittelachse des Flugmoduls kann den äußeren Ring bilden, während der erste Ring (R1) einen inneren Ring mit dem geringsten Abstand zur Mittelachse des Flugmoduls bildet.

Die Ringdurchmesser der Ringe und der Durchmesser der Rotoren der Propeller kann in Abhängigkeit der Abmessungen der Beförderungskapsel gewählt sein, um den erzeugten Abwind der Propeller der Antriebseinheiten in Hinblick auf die Position und Größe der Beförderungskapsel abzustimmen.

Unter dem Durchmesser eines Rotors des Propellers ist der Durchmesser der Kreislinie zu verstehen, die während der Rotationsbewegung der Rotorblätter des Propellers durch die äußeren Enden der Rotorblätter erzeugt wird.

So kann vorzugsweise der Ringdurchmesser des ersten, inneren Ringes (R1) so angeordnet sein, dass die vertikal projizierten Kreislinien der Rotoren der Antriebseinheiten des ersten, inneren Ringes nicht die vertikal projizierte Fläche der Beförderungskapsel überschneiden.

Hierdurch kann die Aerodynamik des Fluggeräts nachhaltig verbessert werden.

Selbstverständlich bedingt darüber hinaus die Gestaltung der Tragwerksstruktur, insbesondere die Anordnung derer Tragwerksbalken, die konkrete Platzierung der Antriebseinheiten an der Tragwerksstruktur.

Ist beispielsweise die Tragwerksbalkenanordnung der Tragwerksstruktur hexagonal ausgebildet, kann beispielsweise ein erster innerer Ring sechs Antriebseinheiten jeweils mittig auf einem der sechs radial nach außen weisenden Tragwerksbalken aufweisen, während ein zweiter Ring weitere sechs Antriebseinheiten jeweils am äußeren Ende der radial nach außen weisenden Tragwerksbalken aufweisen kann.

Weitere sechs Antriebseinheiten können jeweils mittig auf einem, die radial nach außen weisenden Tragwerksbalken verbindenden und die Tragwerksstruktur radial abschließenden Tragwerksbalken angeordnet sein und einen dritten Ring bilden.

Die direkten, geraden Verbindungslinien der Nabenachsen der Propeller eines Ringes können damit im Wesentlichen ein Sechseck bilden.

Gemäß verschiedenen Ausführungsvarianten können die Rotoren der Propeller einer Anzahl der Antriebseinheiten unterschiedliche Durchmesser aufweisen.

Es besteht die Möglichkeit, dass alle Rotoren einen unterschiedlichen Durchmesser aufweisen oder dass eine erste Gruppe von Rotoren einen jeweils einheitlichen, aber eine zweite Gruppe von Rotoren einen zur ersten Gruppe der Rotoren verschiedenen Durchmesser aufweist.

Beispielsweise können Rotoren der Propeller der Antriebseinheiten eines Rings einen einheitlichen Durchmesser aufweisen. Alternativ können die Rotoren der Propeller der Antriebseinheiten eines Rings unterschiedliche Durchmesser aufweisen.

So können beispielsweise die Rotoren der Propeller der Antriebseinheiten eines Rings einen sich abwechselnden unterschiedlichen Durchmesser aufweisen.

Mit der Anordnung von Antriebseinheiten mit unterschiedlichem Rotordurchmesser kann die flächenmäßige Ausnutzung des Luftraumes oberhalb der Tragwerksstruktur optimiert werden und damit die Auftriebswirkung des Flugmoduls und damit des Fluggeräts verbessert werden.

Sind beispielsweise drei Ringe der Antriebseinheiten vorgesehen, können beispielsweise die Rotoren der Propeller der Antriebseinheiten des ersten Rings R1 einen ersten einheitlichen Durchmesser d1 aufweisen, während die Rotoren der Propeller der Antriebseinheiten des zweiten Rings R2 einen zweiten einheitlichen Durchmesser d2 und die Rotoren der Propeller der Antriebseinheiten des dritten Rings R3 einen dritten einheitlichen Durchmesser d3 aufweisen.

Es besteht im Weiteren auch die Möglichkeit, dass die Rotoren der Propeller der Antriebseinheiten eines ersten und eines zweiten Rings R1, R2 einen einheitlichen Durchmesser und die Rotoren der Propeller der Antriebseinheiten des dritten Rings R3 einen unterschiedlichen Durchmesser aufweisen, so dass insgesamt nur zwei Propellergruppen unterschiedlichen Durchmessers vorhanden sind.

Damit verringert sich der Fertigungsaufwand, da lediglich zwei Propellergruppen mit zwei verschiedenen Rotordurchmessern hergestellt werden müssen.

Alle Varianten ermöglichen auf ihre Weise zum einen eine verbesserte Luftraumausnutzung, da weniger Lücken im Luftraum über der Tragwerksstruktur vorhanden sind, die nicht durch einen Rotorkreis der Propeller ausgefüllt werden können, sowie zum anderen eine günstigere Lastverteilung innerhalb des Flugmoduls und damit des Fluggeräts.

Zur Vereinfachung der Fertigung, Montage und Wartung können jedoch auch alle Rotoren der Propeller einen einheitlichen Durchmesser aufweisen.

Gemäß weiteren Ausführungsvarianten können eine Anzahl von Tragwerksbalken, d. h. einige oder alle, ein Hohlprofil aufweisen.

Tragwerksbalken mit Hohlprofil bewirken zum einen eine günstige Massenreduzierung zum Vorteil eines verbesserten Wirkungsgrades des Flugmoduls und damit des Fluggerätes.

Weist das Hohlprofil zumindest teilweise gekrümmte Wandflächen auf, wirkt sich zum anderen günstig auf die Aerodynamik des Flugmoduls und damit des Fluggeräts aus, was zur Reduzierung des Luftwiderstands und zur weiteren Verbesserung des Wirkungsgrades des Flugmoduls beitragen kann. Zudem wirken sich die gekrümmten Wandflächen des Hohlprofils günstig auf die Beul-Eigenschaften des Tragwerkbalkens aus.

Durch die Ausbildung der Tragwerksbalken als Hohlprofil kann eine signaltechnische Verbindung zu den Antriebseinheiten und/oder eine Energieversorgungleitung für die Antriebseinheiten innerhalb der Tragwerksbalken angeordnet werden, so dass diese weitgehend geschützt vor Umwelteinflüssen sind.

Das Hohlprofil des Tragwerksbalkens kann gemäß weiteren Ausführungsvarianten einen in Wirkrichtung der Antriebseinheiten längserstreckten Profilquerschnitt, vorzugsweise einen ovalen Profilquerschnitt, aufweisen.

Durch die einheitliche Wirkrichtung der Antriebseinheiten gibt es eine Hauptrichtung der Biegebelastung der Tragwerksbalken, die durch den längserstreckt ausgebildeten, mit seinen Längsseiten vertikal orientierten Profilquerschnitt vorteilhaft kompensiert werden kann.

Der längserstreckte Profilquerschnitt kann beispielsweise durch ein langlochförmigen, elliptischen, ovalen, oder kombiniert ovalen Profilquerschnitt gebildet sein, wobei die Längsseiten jedes der längserstreckten Profilquerschnitte stets vertikal in Richtung der Wirkrichtung der Antriebseinheiten erstreckt sind.

Der mit den Langseiten vertikal in Richtung der Wirkrichtung der Antriebseinheiten orientierte Profilquerschnitt des Hohlprofils kann gegenüber beispielsweise einem Kreisquerschnitt des Hohlprofils eine höhere Biegebelastung infolge der Wirkrichtung der Antriebseinheiten aufnehmen.

Unter dem langlochförmigen Profilquerschnitt wird ein Querschnitt verstanden, dessen Begrenzungslinie durch zwei Kreisbögen gleichen oder verschiedenen Radiuses und zwei geraden Abschnitten gebildet wird.

Die Begrenzungslinie eines elliptischen Querschnitts ist aus unendlich viele unterschiedlichen Radien zusammengesetzt.

Vorzugsweise weist das Hohlprofil einen ovalen Profilquerschnitt auf. Unter einem ovalen Querschnitt wird ein Querschnitt verstanden, dessen Begrenzungslinie durch zwei verschiedene Radien gebildet wird.

Ein kombiniert ovaler Profilquerschnitt kann mehr als zwei Radien, z. B. drei oder vier Radien, aufweisen.

Ein Hohlprofil mit elliptischem, ovalem oder kombiniert ovalem Querschnittsprofil, das ausschließlich gekrümmte Flächen aufweist, ist zudem noch weniger beulanfällig gegenüber einem langlochförmigen Profilquerschnitt mit ebenen Flächen.

Zusätzlich kann der ovale oder kombiniert ovale Querschnitt des Hohlprofils wegen des größeren Radiuses an dessen Schmalseiten gegenüber dem spitz zulaufenden elliptischen Querschnitt ein noch günstigeres Verhältnis von Querschnittsfläche zum Flächenträgsheitsmoment bieten. Der Querschnitt des Hohlprofils kann bevorzugt in Stärke und Form an den Kraftverlauf und die zu erwartenden mechanischen Belastungen angepasst sein. Beispielsweise kann das Hohlprofil der Tragwerksbalken eine variable, d. h. sich verändernde Wandstärke entlang der Längserstreckung des Tragwerkbalkens und/oder in Umfangsrichtung des Tragwerksbalkens aufweisen.

Gemäß verschiedenen Ausgestaltungen kann die Beförderungskapsel eine aerodynamisch günstige Form aufweisen, z. B. rotationssymmetrisch und/oder im Wesentlichen tropfenförmig ausgebildet sein, so dass im Flugbetrieb zum einen der statische Luftwiderstand der Beförderungskapsel und zum anderen die Beeinflussung der Strömung um die Beförderungskapsel durch den Rotorenbetrieb des Flugmoduls (dynamische Luftwiderstand) weiter verringert werden kann.

Die Tropfenform der Beförderungskapsel kann deshalb bevorzugt im Wesentlichen in Richtung der senkrechten Mittelachse des Flugmoduls erstreckt sein.

Die Tropfenform der Beförderungskapsel kann in den längserstreckten Schaft münden, d. h. die Beförderungskapsel kann einen unteren breiten, abgerundeten Bereich aufweisen, der sich in einem oberen, schlanken Bereich in Richtung des Schafts verjüngt.

Vorzugsweise kann zur Erzeugung einer günstigen aerodynamischen Form die Beförderungskapsel einen Anschlussbereich zum Anschluss des Schaftes mit einer Querschnittsverjüngung zum Übergang auf den Querschnitt des Schaftes aufweisen.

Die Tropfenform kann in der Breite, z. B. quer zu einer Hauptflugrichtung des Fluggeräts, reduziert sein, um einen möglichst geringen Luftwiderstand im Reiseflugbetrieb zu erzeugen.

Die Beförderungskapsel kann blickdichte und blickdurchlässige Flächen aufweisen. Zum Be- und Entladen der Beförderungskapsel bzw. zum Ein- und Aussteigen zu transportierender Personen kann die Beförderungskapsel ein oder mehrere, z. B. zwei, Türen und/oder Klappen aufweisen. Bevorzugt können zwei Türen gegenüberliegend angeordnet und klappbar oder schiebbar ausgebildet sein, um den Ein- und Ausstieg bzw. das Be- und Entladen schnell, sicher und komfortabel zu ermöglichen.

Weiter bevorzugt kann die Beförderungskapsel dicht schließend ausgebildet sein. Dies ermöglicht eine schnelle und kostengünstige Klimatisierung des Innenraums der Beförderungskapsel und schützt die zu befördernden Personen bzw. Lasten vor Witterungseinflüssen und Fahrtwind.

Ist die Beförderungskapsel für einen Personentransport vorgesehen, kann sie Sitze und Sicherheitseinrichtungen wie z. B. Sicherheitsgurte und/oder Airbags aufweisen.

Die Beförderungskapsel kann über Klimatisierungseinrichtungen, z. B. eine Heizung, und Beleuchtungseinrichtungen zur Erhöhung des Komforts verfügen.

Zudem kann im Transportmodul, z. B. in der Beförderungskapsel, eine Hard- und Software, z. B. zur Eingabe des Flugziels, zur Kommunikation mit dem Flugmodul, anderen Fluggeräten oder Bodenstationen, zur Bedienung von Einrichtungen des Transportmoduls oder des Fluggeräts etc., vorhanden sein.

Weiterhin können ein oder mehrere Displays zur Anzeige von Fluginformationen, Statusinformationen des Fluggeräts, Unterhaltungsprogrammen etc. vorhanden sein.

Darüber hinaus kann die Hard- und Software die Möglichkeit zur internen Flug-Kommunikation und -Koordination, z. B. mit einer Bodenkontrollstation, bieten. Beispielsweise kann ein Statusbericht des Fluggerätes oder ein Zustandsbericht über die Beladung oder den Zustieg am Fluggerät kommuniziert werden.

Gemäß weiteren Ausführungsvarianten können die Tragwerksstruktur und/oder die Zentraleinheit und/oder eine Anzahl der Antriebseinheiten Bauelemente aus Faserverbundwerkstoff aufweisen oder aus Faserverbundwerkstoff bestehen.

So kann z. B. eine Anzahl der Tragwerksbalken und/oder der Verbindungsstücke und/oder Befestigungsmittel der Tragwerksstruktur zur Befestigung der Antriebseinheiten und/oder Naben der Propeller und/oder das Gehäuse der Zentraleinheit einen Faserverbundwerkstoff aufweisen oder aus einem Faserverbundwerkstoff bestehen.

Bei dem Faserverbundwerkstoff kann es sich beispielsweise um einen faserverstärkten Kunststoff handeln, wie z. B. kohlefaser-, glasfaser- oder basaltfaserverstärkten Kunststoff.

Verfügt beispielsweise die Zentraleinheit über Kommunikationshardware, kann bevorzugt glasfaserverstärkter Kunststoff verwendet werden, um eine Beeinträchtigung der Funktionalität der Kommunikationshardware zu vermeiden.

In einer Ausgestaltungsvariante können die Tragwerksbalken aus einem pultrudierten Hohlprofil aus faserverstärktem Kunststoff, z. B. kohlefaserverstärktem Kunststoff, gebildet sein.

Gemäß weiteren Ausführungsvarianten kann das Transportmodul einen Faserverbundwerkstoff aufweisen oder aus einem Faserverbundwerkstoff bestehen. Bevorzugt können die Beförderungskapsel und/oder der Schaft einen Faserverbundwerkstoff aufweisen oder aus einem Faserverbundwerkstoff bestehen.

Der Faserverbundwerkstoff kann spezielle textile Faserverstärkungselemente aufweisen. Die textile Faserverstärkung kann in Form von flächigen oder bandförmigen Geweben, Gestricken, Gewirken oder Geflechten in eine Kunststoffmatrix eingebracht sein.

Die Verwendung von Faserverbundwerkstoffen verwirklicht eine Verbesserung des Verhältnisses von Stabilität und Masse des Flugmoduls, da die aus Faserverbundwerkstoffen hergestellten Bauelemente eine niedrige Masse bei gleichzeitig guten bis sehr guten mechanischen Eigenschaften, wie z. B. Festigkeit, E-Modul, Schlagzähigkeit, aufweisen.

Vorzugsweise kann der Faserverbundwerkstoff unidirektional angeordnete Verstärkungsfasern aufweisen.

Diese Verstärkungsfasern können konzentriert und im Wesentlichen einheitlich ausgerichtet als sogenannte UD-Fasergurte ausgebildet sein, die in differenziert angeordneten Lagen innerhalb des Faserverbundmaterials zur Kompensation auftretender hoher mechanischer Belastungen, z. B. am Tragwerksbalken, eingesetzt werden können.

Beispielsweise können Zug-, Druck- und/oder Biegebelastungen, z. B. innerhalb der Tragwerksbalken, von UD-Fasergurten aus unidirektionalen Verstärkungsfasern aufgenommen werden, während Torsions- und/oder Schubbeanspruchungen durch in einem Winkel von +/- 45° ausgerichtete Fasern, z. B. in einem Gewebe oder Gelege, kompensiert werden.

Vorteilhafter Weise ist zur Kompensation der auftretenden der Beanspruchung der Tragwerksbalken eine textile Faserverstärkung, in der Preform der Tragwerksbalken wie beispielsweise folgender Maßen vorgesehen:
- abwechselnde Anordnung von einzelnen Faserlagen mit in einem Winkel von +/- 45° ausgerichtete Fasern durch Wickeln,
- unidirektionale, axial verlaufende Fäden als Gurte an der Ober- und Unterseite der Tragwerksbalken,
- abschließend äußere Faserlage mit in einem Winkel von +/- 45° ausgerichtete Fasern durch Flechten.

Das beim Flechten entstehende Fasergebilde mit gekreuzten und ondulierten Fasern steigert die Robustheit des Tragwerksbalkens.

Zudem kompensiert die äußere Lage mit einem Fasergebilde aus in einem Winkel von +/- 45° ausgerichtete Fasern besonders die auftretende Torsionsbeanspruchung des Tragwerkbalkens.

Gemäß verschiedenen Ausführungsvarianten kann das Fluggerät eine Steuereinheit aufweisen. Diese Steuereinheit kann beispielsweise zum Ausgeben eines Steuersignals zum Einschalten oder Ausschalten der Antriebseinheiten eingerichtet und ausgebildet sein. Alternativ oder zusätzlich kann die Steuereinheit zum Ausgeben eines Steuersignals zum Öffnen oder Schließen der Kupplungseinrichtung und/oder zum Einstellen des Neigungswinkels α, d. h. der Neigung des Transportmoduls bezüglich des Flugmoduls eingerichtet und ausgebildet sein. Die Kupplungseinrichtung kann entsprechend als steuerbare Kupplungseinrichtung ausgebildet ist. Alternativ oder zusätzlich kann die Steuereinheit zum Ausgeben eines Steuersignals zum Einstellen des Anstellwinkels β ausgebildet sein. Darüber hinaus kann die Steuereinheit weitere Vorgänge steuern, z. B. das Öffnen und Schließen einer Tür der Beförderungskapsel.

Weitere Vorteile der vorliegenden Erfindung sind aus den Abbildungen sowie der zugehörigen Beschreibung ersichtlich. Es zeigen:
- Figur 1: beispielhafte Darstellung eines modularen Fluggeräts;
- Figur 2: schematische Darstellung einer Seitenansicht eines modularen Fluggeräts;
- Figur 3: beispielhafte Darstellung eines Flugmoduls mit Zentraleinheit;
- Figur 4: schematische Darstellung der Draufsicht auf die Tragwerksstruktur eines Flugmoduls;
- Figur 5: schematische Darstellung der Draufsicht eines Flugmoduls mit Tragwerksstruktur, daran angeordneten Antriebseinheiten und Zentraleinheit;
- Figur 6: schematische Darstellung der Seitenansicht auf die Tragwerksstruktur eines Flugmoduls mit Zentraleinheit;
- Figur 7: schematische Darstellung der Luftraumabdeckung durch die Propeller der Antriebseinheiten eines Flugmoduls;
- Figur 8a-c: schematische Darstellung verschiedener Querschnitte der Tragwerksbalken;
- Figur 9a-c: schematische Darstellung verschiedener Schellen zur Befestigung der Antriebseinheiten an der Tragwerksstruktur;
- Figur 10: beispielhafte Darstellung eines Transportmoduls mit Kupplungseinrichtung;
- Figur 11: schematische Darstellung einer Seitenansicht eines Transportmoduls mit Kupplungseinrichtung;
- Figur 12: schematische Darstellung einer weiteren Seitenansicht eines Transportmoduls mit Kupplungseinrichtung;
- Figur 13: schematische Darstellung eines Transportmoduls in Seitenansicht mit Luftleiteinrichtung;
- Figur 14: schematische Darstellung eines Transportmoduls in einer weiteren Seitenansicht mit weiteren Luftleiteinrichtungen;
- Figur 15: schematische Darstellung in Draufsicht auf die Tragwerksstruktur eines Flugmoduls mit Luftleiteinrichtungen; und
- Figur 16: schematische Darstellung eines Fluggeräts mit geneigtem Flugmodul und angestellten Luftleiteinrichtungen.

In den im Folgenden erläuterten Beispielen wird auf die beigefügten Zeichnungen Bezug genommen, die einen Teil der Beispiele bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres" usw. mit Bezug auf die Orientierung der beschriebenen Figuren verwendet. Da Komponenten von Ausführungsformen in einer Anzahl verschiedener Orientierungen positioniert werden können, dient die Richtungsterminologie zur Veranschaulichung und ist auf keinerlei Weise einschränkend.

Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden die Begriffe "verbunden", "angeschlossen" sowie "gekuppelt" verwendet zum Beschreiben sowohl einer direkten als auch einer indirekten Verbindung, eines direkten oder indirekten Anschlusses sowie einer direkten oder indirekten Kopplung. In den Figuren werden identische oder ähnliche Elemente mit identischen Bezugszeichen versehen, soweit dies zweckmäßig ist.

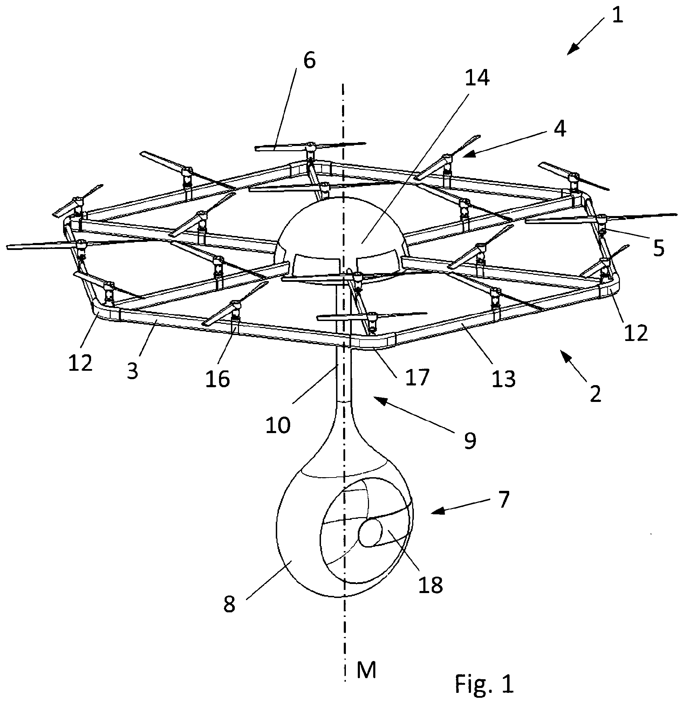

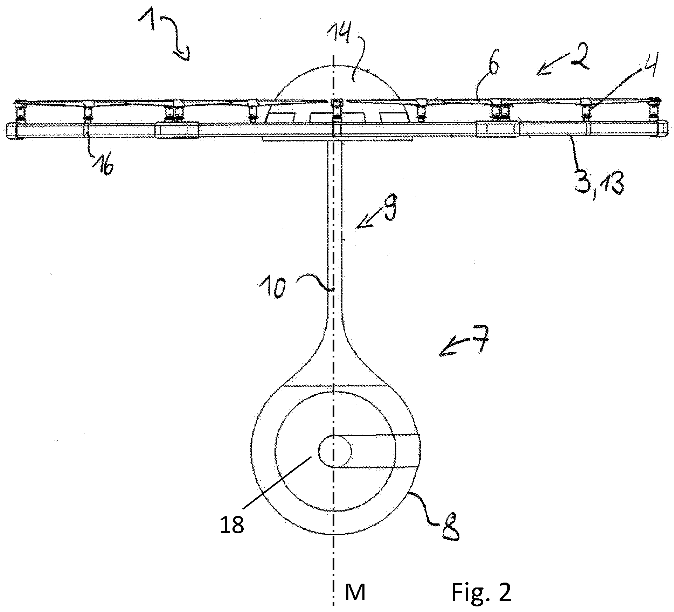

Figur 1 und 2 zeigt ein beispielhaftes senkrecht startendes und landendes modulares Fluggerät 1 zum Transport von Personen und/oder Lasten. Das Fluggerät 1 weist ein Flugmodul 2, ein Transportmodul 7 und eine Kupplungseinrichtung 11 (in Figur 1 nicht dargestellt) auf.

Figur 2 zeigt das Fluggerät 1 der Figur 1 in einer schematischen Seitenansicht.

Das Flugmodul 2 stellt den Antrieb des Fluggerätes 1 bereit.

Mittels der Kupplung des Flugmoduls 2 mit dem Transportmoduls 7 kann das Transportmodul 7 vom Boden abgehoben, transportiert und mittels einer Ständereinrichtung z.B. des Transportmoduls 7 oder des Flugmoduls 2 (nicht gezeigt) auf einer Stellfläche abgestellt werden.

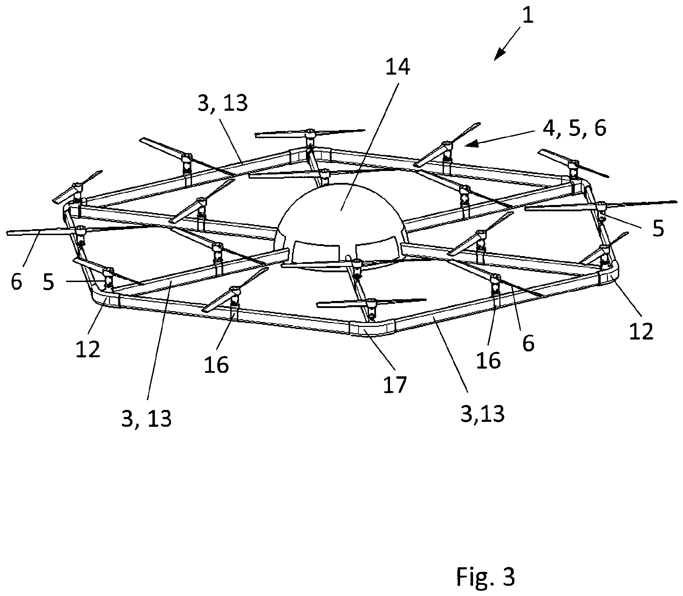

Das Flugmodul 2 ist in den Figuren 3 bis 9 und 15, das Transportmodul 7 und die Kupplungseinrichtung 11 sind in den Figu-ren 10 bis 14 näher dargestellt.

Zunächst wird das Flugmodul 2 bezugnehmend auf Figur 3 näher beschrieben.

Das Flugmodul 2 weist neben einer mittig zur vertikalen Mittelachse M des Flugmoduls 2 angeordneten Zentraleinheit 14 eine Tragwerksstruktur 3 mit mehreren Tragwerksbalken 13 auf, die an Knotenpunkten 12 untereinander mittels als T-Stücke ausgebildeten Verbindungsstücken 17 sowie mit der Zentraleinheit 14 verbunden sind.

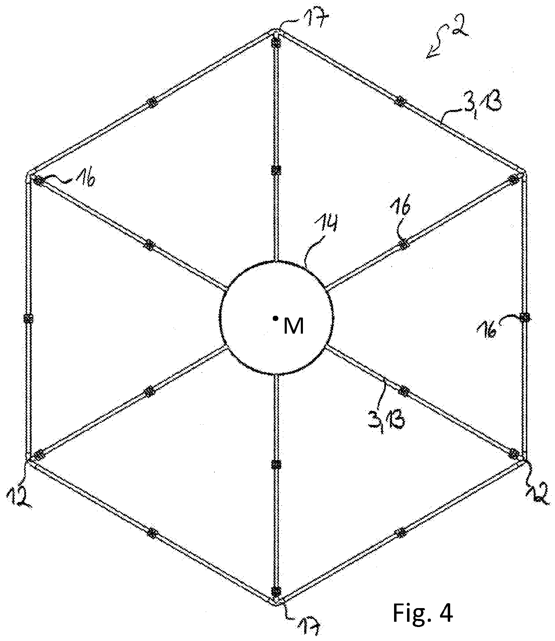

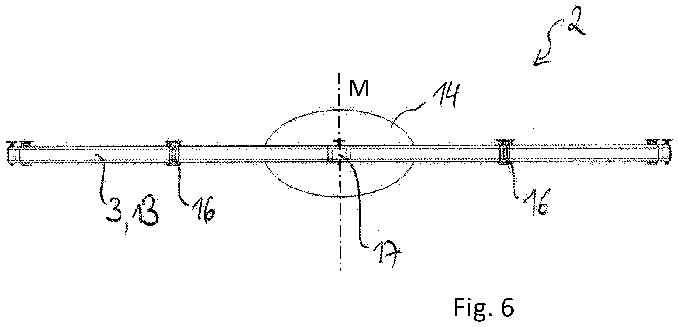

Diese Tragwerksstruktur 3 sowie die Zentraleinheit 14 des Flugmoduls 2 gemäß Figur 1 und 2 sind in Figur 4 schematisch in der Draufsicht und in Figur 6 in der Seitenansicht dargestellt. Die Tragwerksstruktur 3 wird durch sechs radial von der Zentraleinheit 14 nach außen verlaufenden Tragwerksbalken 13 sowie durch sechs weitere Tragwerksbalken 13 gebildet, welche die der Zentraleinheit 14 gegenüberliegenden Enden der radial verlaufenden Tragwerksbalken 13 unter Ausbildung eines Sechsecks an den Knotenpunkten 12 miteinander verbinden.

Die Verbindung der Tragwerksbalken 13 an den Knotenpunkten 12 ist mittels T-Stück-förmigen Verbindungsstücken 17 realisiert, die die Enden der Tragwerksbalken 13 mindestens 100 mm tief vollständig umschließend aufnehmen. Durch den formschlüssigen, bündigen Sitz der Tragwerksbalken 13 in den Verbindungsstücken 17 wird die Ausrichtbarkeit der Tragwerksbalken 13 verbessert. Zudem werden die Lagerkräfte gleichmäßiger verteilt. Zur Ausbildung der hexagonalen Form der Tragwerksstruktur 3 weisen die Verbindungsstücke 17 drei Ausleger auf, wobei zwei Ausleger jeweils einen Winkel von 60° zueinander einschließen.

Die Verbindungsstücke 17 des Ausführungsbeispiels bestehen aus einem Faserverbundwerkstoff und sind zur Vereinfachung der Montage und Wartung zweiteilig aus einer Ober- und einer Unterschale ausgeführt.

Die miteinander zu verbindenden Tragwerksbalken 5 können zusätzlich innerhalb des T-stückförmigen Verbindungsstückes untereinander formschlüssig verbunden werden. Dazu können die Enden der Tragwerksbalken 5 Schlitze und Stege aufweisen, mittels derer die Tragwerksbalken 5 in einem bestimmten Winkel zueinander zusammengesteckt werden können.

Die zusammengesteckten Enden der Tragwerksbalken 5 können in die Ober- oder Unterschale des zweiteiligen T-stückförmigen Verbindungsstückes 11 eingelegt werden und nach Verschluss des T-stückförmigen Verbindungsstückes 11 vollständig vom T-stückförmigen Verbindungsstückes 11 umschlossen werden.

Des Weiteren sind in Figur 4 Schellen als Befestigungsmittel 16 ersichtlich, die zur Befestigung von Antriebseinheiten 4 an den Tragwerksbalken 13 der Tragwerksstruktur 3 dienen. Die Befestigungsmittel 16 sind sowohl ungefähr mittig auf jedem Tragwerksbalken 13 sowie am äußeren Ende der radial von der Zentraleinheit 14 nach außen verlaufenden Tragwerksbalken 13, jedoch außerhalb der Knotenpunkte 12 angeordnet. Insgesamt sind im Ausführungsbeispiel 18 Befestigungsmittel 16 zur Befestigung von 18 Antriebseinheiten 4 vorgesehen, wobei jedoch auch eine davon abweichende Anzahl an Befestigungsmitteln 16 bzw. Antriebseinheiten 4 vorgesehen sein kann.

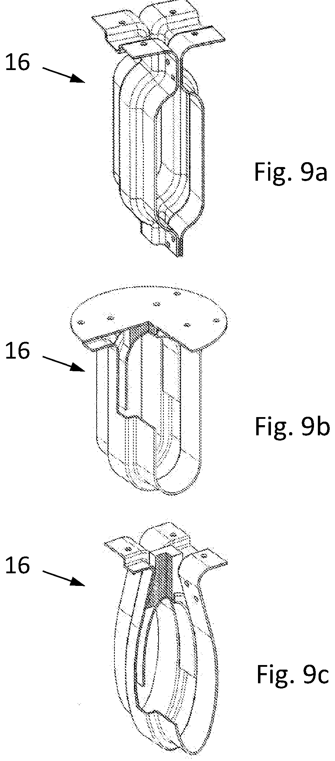

Die Befestigungsmittel 16 können beispielsweise wie in den Figuren 9a bis 9c dargestellt ausgebildet sein.

Figur 9a zeigt eine zweiteilige Schelle 16 aus zwei halbschalenförmigen Schellenteilen mit jeweils einseitig abgewinkelten Enden, die durch eine Verschraubung in horizontaler Richtung mit dem Tragwerksbalken 13 (nicht gezeigt) verspannt werden. Die abgewinkelten Enden stellen einen Bereich zur Verbindung der Schellenteile mit der Antriebseinheit 4 (nicht dargestellt) bereit, wobei die Schellenteile durch eine Schrauboder Nietverbindung mit der Antriebseinheit 4 verbunden sein können.

In Figur 9b ist eine Schelle als Befestigungsmittel 16 dargestellt, die ein Omega-förmiges, unteres Schellenteil mit beidseitig abgewinkelten Enden, ein U-förmiges, oberes Schellenteil und ein flächiges Deckelelement aufweist.

Das Omega-förmige, untere Schellenteil umschließt den Tragwerksbalken zumindest teilweise seitlich und im unteren Bereich. Das U-förmige obere Schellenteil umschließt den Tragwerksbalken 5 zumindest teilweise seitlich und im oberen Bereich.

Das Deckelelement der Schelle ist durch eine Schraub- oder Nietverbindung mit den abgewinkelten Enden des Omega-förmigen Schellenteils verbunden, wodurch die Schelle in vertikaler Richtung mit dem Tragwerksbalken 13 verspannt wird. Darüber hinaus dient das Deckelelement dem Anschluss der Antriebseinheit 4 (nicht dargestellt).

Zusätzlich ist ein Druckstück (Zwischenlageelement) vorgesehen sein, welches das U-förmige, obere Schellenteil gegen das Deckelelement abstützt, wodurch beim Schließen der Schelle das Omega-förmige untere Schellenteil und das U-förmige, obere Schellenteil sowohl gegeneinander als auch gegen den Tragwerksbalken 13 verspannt und damit die kraft- und formschlüssige Verbindung zwischen Schelle und Tragwerksbalken 13 herstellt. Das Druckstück kann auch Bestandteil des Deckelelements oder des U-förmigen Schellenteils sein).

Die Schelle gemäß Fig. 9b ist somit vierteilig ausgebildet.

In Figur 9c ist eine Schelle als Befestigungsmittel 16 dargestellt, die ein Omega-förmiges, unteres Schellenteil mit beidseitig abgewinkelten Enden, ein U-förmiges oberes Schellenteil und ein Druckstück (Zwischenlageelement) aufweist.

Das Omega-förmige, untere Schellenteil umschließt den Tragwerksbalken 13 zumindest teilweise seitlich und im unteren Bereich, wobei die abgewinkelten Enden des Omega-förmigen, unteren Schellenteils einen Bereich zur Verbindung mit der Antriebseinheit 4 bereitstellen.

Das U-förmige, obere Schellenteil umschließt den Tragwerksbalken 13 zumindest teilweise seitlich und im oberen Bereich.

Die abgewinkelten Enden des Omega-förmigen Schellenteils Schelle sind durch eine Schraub- oder Nietverbindung mit der der Antriebseinheit 4 (nicht dargestellt) verbindbar, wodurch die Schelle in vertikaler Richtung mit dem Tragwerksbalken 13 verspannt wird.

Das zusätzlich vorgesehene Druckstück (Zwischenlageelement) stützt die abgewinkelten Enden des Omega-förmigen Schellenteils oberhalb des Tragwerkbalkens 13 und bewirkt beim Schlie-ßen der Schelle und Montage der Antriebseinheit 3 eine Verspannung des Omega-förmigen, unteren Schellenteils und des U-förmigen, obere Schellenteils gegen den Tragwerksbalken 13 und stellt damit die kraft- und formschlüssige Verbindung zwischen Schelle und Tragwerksbalken 13 her. Das Druckstück kann Bestandteil des U-förmigen Schellenteils sein.

Die Schelle gemäß Fig. 9c ist somit dreiteilig ausgebildet.

Im oberen Bereich verfügen die Befestigungsmittel 16 nach den Figuren 9a bis 9c jeweils über abgewinkelte Enden zur unmittelbaren Aufnahme der Antriebseinheiten 3 (Fig. 9a, 9c), oder zur mittelbaren Aufnahme der Antriebseinheiten 4 (Fig. 9b) über das Deckelelement.

Die Antriebseinheiten 4 können mit dem abgewinkelten Enden bzw. mit dem Deckelelement verschraubt oder vernietet werden.

Die Befestigungsmittel 16 gemäß den Figuren 9a bis 9c bilden im Montagezustand jeweils einen Omega-Fiorm, d. h. ihre äußere Form entspricht in etwa dem griechischen Großbuchstaben Omega. Die Befestigungsmittel 16 sind zudem so ausgebildet, dass sie der Außenkontur der Tragwerksbalken 13 weitestgehend folgen und den Tragwerksbalken 13 seitlich und unten zumindest teilweise umfassen, so dass im Verbindungszustand ein Kraft- und Formschluss mit dem Tragwerksbalken 13 gewährleistet ist.

Die Tragwerksbalken 13 bestehen aus einem pultrudierten Hohlprofil aus faserverstärktem Kunststoff, z. B. kohlefaserverstärktem Kunststoff.

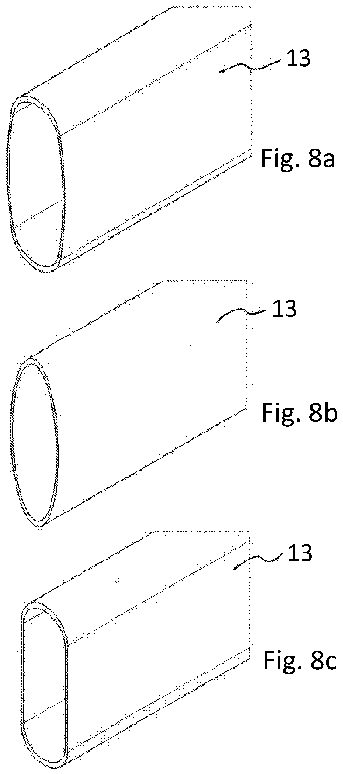

Mögliche Querschnitte mit jeweils einem längserstreckten Hohl-Profilquerschnitt zeigen die Figuren 8a bis c in Schnittdarstellung, wovon das Hohlprofil gemäß Figur 8a einen bevorzugten ovalen Querschnitt, das Hohlprofil gemäß Figur 8b einen elliptischen und das Hohlprofil gemäß Figur 8c einen langlochförmigen Querschnitt aufweist. Die Längsseiten der Hohlprofile weisen jeweils in eine senkrechte Wirkrichtung der Antriebseinheiten 4 (nicht dargestellt).

Das Hohlprofil der Tragwerksbalken 13 gemäß Figur 8a, 8b und 8c weist jeweils eine variable Wandstärke in Umfangsrichtung des Tragwerksbalkens 13 auf.

In Bereichen des Umfangs mit hoher Beanspruchung infolge einwirkender Kräfte ist die Wandstärke größer als in Bereichen geringerer Beanspruchung. Beispielweise kann die Wandstärke, wie in Figur 8a, 8b, 8c ersichtlich, im Bereich der Schmalseiten des Umfangs (oben und unten in der Darstellung gemäß Figur 8a, 8b, 8c) größer als im Bereich der Längsseiten des Umfangs sein. Weiterhin kann die Wandstärke nicht nur in Umfangsrichtung entlang des Querschnitts unterschiedlich groß sein, sondern auch entlang der Längserstreckung des Tragwerksbalkens 13 variieren. Beispielsweise kann die Wandstärke der radial von der Zentraleinheit 14 nach außen verlaufenden Tragwerksbalken 13 von außen nach innen in Richtung Zentraleinheit 14 zunehmen. Die auftretenden Belastungen können computersimuliert werden, um die erforderliche Mindestwandstärke zu berechnen.

Im Hohlprofil verlaufen Leitungen zur signaltechnischen Verbindung sowie Energieversorgung.

Erneut bezugnehmend auf Figur 3, ist ersichtlich, dass das Flugmodul 2 Antriebseinheiten 4 aufweist, die jeweils über einen Propeller 6 mit einem Rotor aus zwei Rotorblätter und einen bürstenlosen Gleichstrommotor als Elektromotor 5 verfügen, wobei der Propeller 6 mittels des Elektromotors 5 angetrieben wird. Mittels einer Nabe des jeweiligen Propellers 6 ist dieser drehbar am Elektromotor 5 gelagert.

Optional kann eine Abdeckung, z. B. in Form eines Spinners, zur Abdichtung der Antriebseinheit 4 gegenüber Wasser und Schmutz sowie zur Verbesserung der Aerodynamik vorhanden sein. Die Propeller 6, insbesondere dessen Rotoren, weisen einen Faserverbundwerkstoff, z. B. kohlefaserverstärkten Kunststoff, auf.

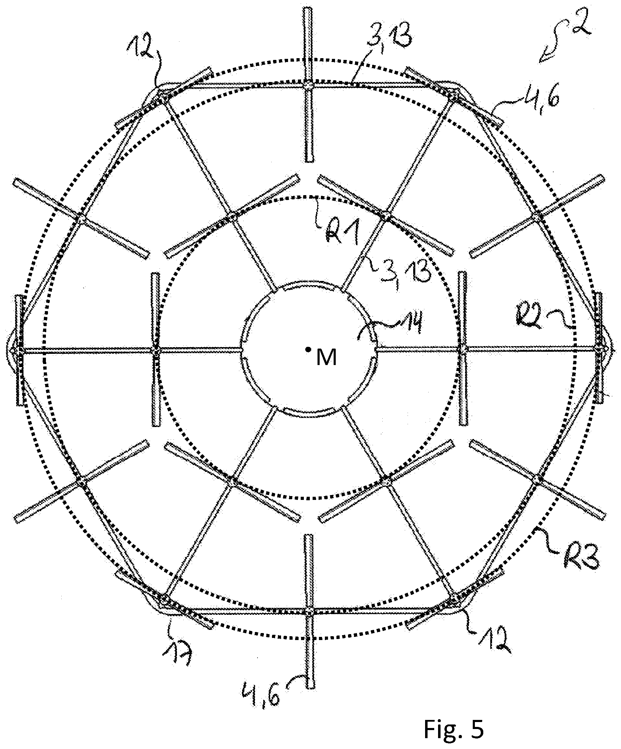

Figur 5 zeigt die Draufsicht des Flugmoduls 2 gemäß Figur 3 schematisch.

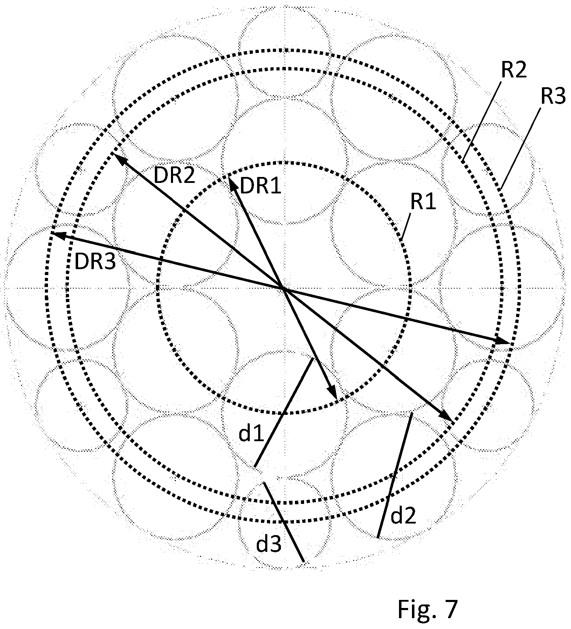

Die Antriebseinheiten 4, im Ausführungsbeispiel 18 Antriebseinheiten 4, sind in einer Ebene der Tragwerksstruktur 3 außerhalb der Knotenpunkte 12 in einem ersten, einem zweiten und einem dritten Ring (R1, R2, R3) mit jeweils sechs Antriebseinheiten 4 konzentrisch um die vertikale Mittelachse M des Flugmoduls 2 angeordnet. Der erste, zweite und dritte Ring R1, R2, R3 weisen einen unterschiedlichen Ringdurchmesser DR1, DR2, DR3 auf (ersichtlich auch in Figur 7).

Die Antriebseinheiten 4 sind mittels der als Schellen ausgebildeten Befestigungsmittel 16 unmittelbar an den Tragwerksbalken 13 der Tragwerksstruktur 3 befestigt.

Die Rotoren der Propeller 6 der Antriebseinheiten 4 weisen unterschiedliche Durchmesser d1, d2, d3 auf. Im Ausführungsbeispiel weisen die Rotoren der sechs Propeller 6 der Antriebseinheiten 4 des ersten (inneren) Rings R1 einen ersten einheitlichen Durchmesser d1 von 1800 mm auf. Die Rotoren der sechs Propeller 6 der Antriebseinheiten 4 des zweiten Rings R2 weisen einen zweiten Durchmesser d2 auf, der im Ausführungsbeispiel dem Durchmesser d1 der Rotoren der Propeller 6 des inneren ersten Rings von 1800 mm entspricht. Die Rotoren der sechs Propeller 6 der Antriebseinheiten 4 des dritten Rings R3 weisen einen dritten Durchmesser d3 von 1300 mm auf (Figur 7). Mit anderen Worten weist das Flugmodul 2 zwölf Propeller 6 mit Rotoren mit einem Durchmesser d1, d2 von 1800 mm und sechs Propeller 6 mit Rotoren mit einem Durchmesser d3 von 1300 mm auf.

Aus der Anordnung der Antriebseinheiten 4 um die vertikale Mittelachse M und der Größe der Rotoren der Propeller 6 ergibt sich nach diesem Ausführungsbeispiel ein Gesamtdurchmesser des Flugmoduls 2 von maximal 8,14 m.

In Figur 7 ist die durch die Rotoren der Propeller 6 der Antriebseinheiten 4 des Flugmoduls 2 erreichbare Luftraumabdeckung dargestellt. Es zeigt sich, dass durch die beschriebene Auswahl der Rotoren der Propeller 6 eine hohe Konzentration der abdeckbaren Fläche oberhalb der Tragwerksstruktur 3 und damit eine sehr gute Luftraumabdeckung erreicht wird, obwohl lediglich zwei Rotorsorten unterschiedlichen Durchmessers gefertigt werden müssen.

Durch die sehr gute Luftraumabdeckung wird die Leistungsfähigkeit des Flugmoduls 2 und damit auch des Fluggeräts 1 verbessert und gleichzeitig der Platzbedarf des Flugmoduls 1 beim Starten und Landen und dem Aufenthalt am Boden minimiert, was insbesondere beim Betrieb des Fluggerätes 1 in einem urbanen Umfeld vorteilhaft ist.

Die Zentraleinheit 14 des Flugmoduls 2 ist in Form einer Halbkugel aus kohlefaserverstärktem oder glasfaserverstärktem Kunststoff ausgebildet. In der Zentraleinheit 14 befindet sich die Kommunikations- und Steuerungstechnik des Flugmoduls 2. Zudem befinden sich in der Zentraleinheit 14 wiederaufladbare Akkumulatoren zur Energieversorgung der Antriebseinheiten 4 sowie weiterer elektrischer Energieverbraucher.

Optional kann in der Zentraleinheit 14 zudem ein Rettungssystem mit einen Fallschirm zum Herausschießen untergebracht sein.

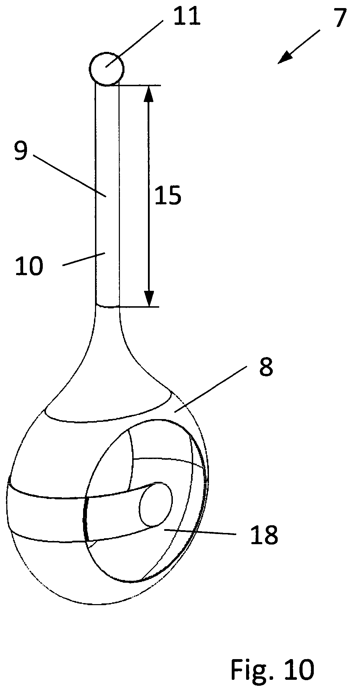

Im Folgenden wird das Transportmodul 7 des Fluggeräts 1 bezugnehmend auf die Figuren 10 bis 12 näher beschrieben.

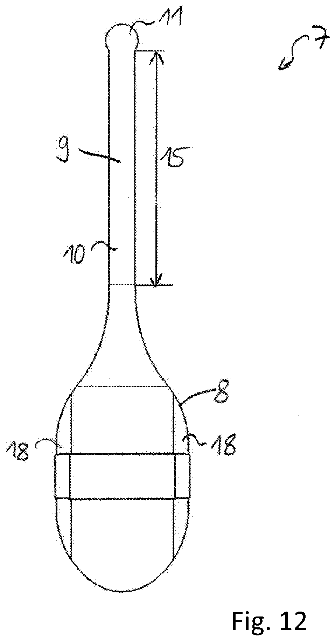

Figur 10 zeigt eine beispielhafte Darstellung des Transportmoduls 7 zur Beförderung von Personen. Das Transportmodul 7 weist eine tropfenförmig ausgebildete Beförderungskapsel 8 auf, wobei die Tropfenform im Flugzustand des Fluggeräts (siehe Figur 1) im Wesentlichen vertikal erstreckt ist. Die Tropfenform ist in der Breite reduziert, wie ebenfalls in Figur 1 und 10 sowie besonders in Figur 12 ersichtlich.

Die Beförderungskapsel 8 weist zwei gegenüberliegende Türen 18 auf, durch die die zu transportierenden Personen die Beförderungskapsel 8 betreten und verlassen können. Die Türblätter der Türen 18 sind im Ausführungsbeispiel rund ausgebildet, können jedoch eine beliebige andere Form aufweisen.

Die Türen 8 können über eine Vorrichtung zur beweglichen Anbindung mit der Beförderungskapsel 2 verbunden sein (schematisch als ein die Türen erfassenden Bügel dargestellt). Die Türen können mittels eines Drehscharnier-Systems auf- oder zuklappbar oder mittels eines Schienensystems verschiebbar an der Beförderungskapsel 2 angeordnet sein.

Die Beförderungskapsel 8 ist vollständig geschlossen ausgebildet und verfügt über eine teilweise blickdurchlässige Hülle, so dass Personen aus der Beförderungskapsel 8 hinaus schauen können.

Optional kann die Beförderungskapsel 8 ein Lademodul mit einem oder mehreren wiederaufladbaren Energiespeichern aufweisen.

Im Inneren der Beförderungskapsel 8 sind mit Sicherheitsgurten und Airbags ausgestattete Sitze, eine Klimatisierungseinrichtung, Displays sowie eine Kommunikationseinrichtung zur Kommunikation mit dem Flugmodul 2, anderen Fluggeräten oder einer Bodenstation angeordnet (nicht dargestellt).

Die Beförderungskapsel 8 ist mittels der Verbindungseinrichtung 9 mit einem Flugmodul 2 verbindbar. Dazu weist die Verbindungseinrichtung 9 einen längserstreckten, rotationssymmetrisch ausgebildeten Schaft 10 auf, der einen Endes an die Beförderungskapsel 8 anschließt.

Der Schaft 10 ist derart erstreckt ausgebildet, dass ein Sicherheitshöhenabstand 15 hergestellt ist.

Der Sicherheitshöhenabstand 15 ist durch die Länge des Schafts 10 bestimmt. Der Sicherheitshöhenabstand 15 bzw. die Länge des Schaftes 10 misst gemeinsam mit der Höhe der Beförderungskapsel 8 eine Höhe von beispielsweise 3 m über eine Aufstellfläche der Beförderungskapsel 3, wobei die Beförderungskapsel 8 beispielsweise eine Höhe von 2 m aufweist und der Sicherheitshöhenabstand 15 bzw. die Länge des Schaftes 10 1,0 m beträgt.

Der Schaft 10 sowie die Beförderungskapsel 8 weisen einen Faserverbundwerkstoff, z. B. einen kohlefaser- oder glasfaserverstärkten Kunststoff auf, wodurch sich das Transportmodul 7 durch eine geringe Masse bei gleichzeitig sehr guten mechanischen Eigenschaften auszeichnet.

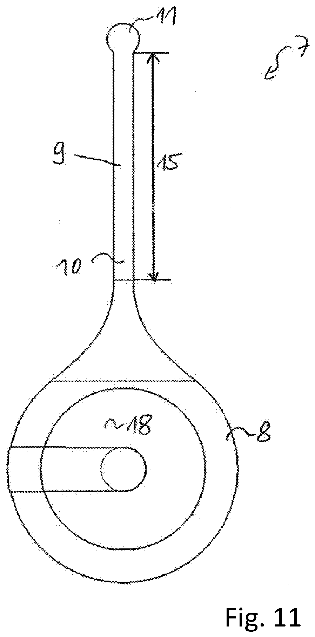

Figur 11 zeigt das Transportmodul 7 der Figur 10 schematisch in einer Seitenansicht. Neben den in Zusammenhang mit Figur 10 beschriebenen Komponenten ist aus Figur 11 der Sicherheitshöhenabstand 15 ersichtlich, der durch die Länge des Schafts 10 bestimmt ist.

Figur 12 zeigt das Transportmodul 7 der Figur 10 schematisch in einer weiteren Seitenansicht aus einer im Vergleich zur Figur 11 um 90 ° um die Längsachse des Schafts 10 gedrehten Perspektive.

Aus den Figuren 1 und 2 ist ersichtlich, dass das Flugmodul 2 mit dem Transportmodul 7 gekuppelt werden kann. Erkennbar ist, dass das Transportmodul 7 mit der mittig mit der Unterseite der Zentraleinheit 14 des Flugmoduls 2 gekuppelt ist. Entsprechend ist das Transportmodul 7 mittig unterhalb des Flugmoduls 2 angeordnet.

Zur Kupplung der beiden Module dient die Kupplungseinrichtung 11, die als selbsttätige Gelenkkupplung ausgebildet ist, so dass ein automatisches An- und Abkuppeln verschiedener Transportmodule 7 an dasselbe Flugmodul 2 möglich ist, wobei die Transportmodule 7 unterschiedlich ausgebildet sein können. Ebenso können unterschiedliche Flugmodule 2 an dasselbe Transportmodul 7 gekuppelt werden.

Die Ausbildung als Gelenkkupplung ermöglicht eine flexible Neigungsposition von Transportmodul 7 und Flugmodul 2 zueinander. Mit anderen Worten ist mittels der Gelenkkupplung die Neigung des Flugmoduls 2 bezüglich des angekuppelten Transportmoduls 7 variierbar. Dadurch kann eine vertikale Ausrichtung des Transportmoduls 7 auch bei einer abweichenden Ausrichtung des Flugmoduls 2 während des Flugbetriebes weitestgehend beibehalten werden und der Schwerpunkt des Fluggeräts 1 auf einen beschränkten zentralen Bereich konzentriert werden, was den Komfort und die Steuer- und Regelfähigkeit des Fluggerätes 1 verbessert.

Die Kupplungseinrichtung 11 kann steuerbar ausgebildet sein, so dass eine Verbindung zwischen dem Transportmodul 7 und dem Flugmodul 2 gezielt hergestellt oder gelöst werden kann.

Das Flugmodul 2 und das Transportmodul 7 können systemintern miteinander kommunizieren. Beispielsweise kann das Transportmodul 7 eine Statusmeldung über den Beladungs- und/oder Zustiegsstatus oder über die Lage in einer Start- und Landestation abgeben. Sowohl das Flugmodul 2 als auch das Transportmodul 7 können eine Statusmeldung bei erfolgreichem Kupplungsvorgang abgeben. Zudem besteht die Möglichkeit, dass das Flugmodul 2 Informationen, z. B. über den Flugzustand, die Reisezeit, das Wetter etc., bereitstellt, welche den Personen im Transportmodul 7 kommuniziert werden können, z. B. mittels Anzeige auf einem Display in der Beförderungskapsel 8.

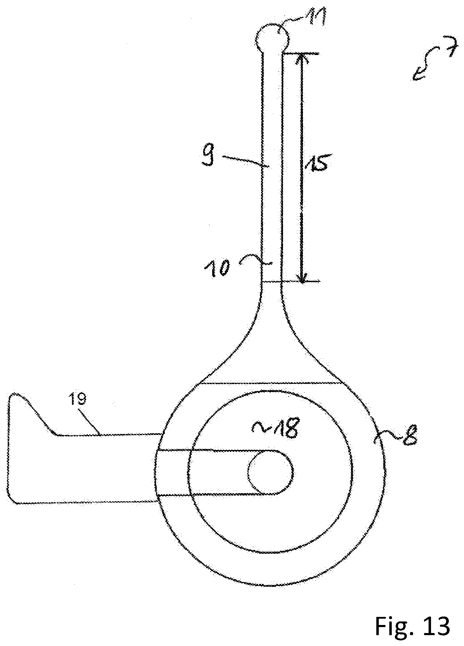

Figur 13 zeigt ein Transportmodul 7, welches eine Luftleiteinrichtung 19 aufweist. Diese ist flügelartig, als senkrecht orientierte, ebene Platte ausgebildet und auf einer der Reiseflugrichtung des Fluggerätes 1, insbesondere des Transportmoduls 7, entgegengesetzten Rückseite des Transportmoduls 7 angebracht (Figur 13: Flugrichtung des Fluggerätes 1 liegt in der Bildebene, das Fluggerät 1 bewegt sich nach rechts). Die Luftleiteinrichtung 19 fungiert als Leitwerk, welches das Transportmodul 7 während des Fluges des Fluggerätes 1 in stabiler Lage gegenüber seiner Hoch- bzw. Längsachse hält.

Die Luftleiteinrichtung 19 kann stationär oder drehbeweglich am Transportmodul 7 befestigt sein. Zudem kann die Position der Luftleiteinrichtung 19 gegenüber dem Transportmodul 7 verfahrbar sein, z.B. linear weiter aus- oder eingefahren werden.

Es können weitere Luftleiteinrichtungen 19 angebracht sein, um weitere Stabilisierungseffekte oder Verbesserungen in der Luftströmung am Transportmodul 7 zu bewirken.

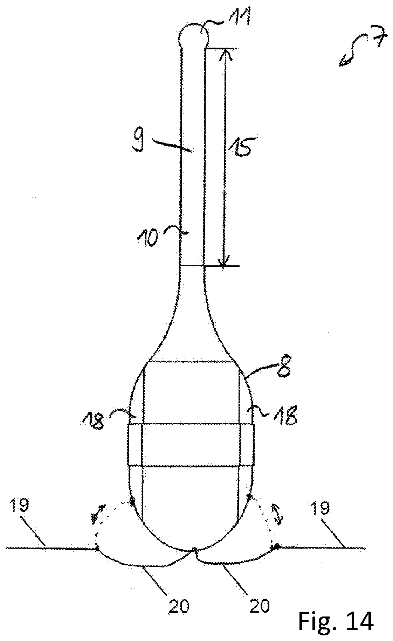

Figur 14 zeigt ein Transportmodul 7 mit zwei weiteren Luftleiteinrichtungen 19, welche als Auftriebshilfe zur Erzeugung eines zusätzlichen Auftriebs des Fluggerätes 1 während des Reisefluges (Vorwärtsfluges) des Fluggerätes 1 dienen.

Die Luftleiteinrichtungen 19 weisen jeweils einen Flügel auf, der plattenförmig oder leicht gewölbt ausgebildet ist, wobei die Plattenebene in Flugrichtung des Fluggerätes 1, insbesondere in Flugrichtung des Transportmoduls 7 (Figur 14: Flugrichtung des Fluggerätes 1 liegt senkrecht zur Bildebene), erstreckt ist, so dass in Fig. 14 nur ein als Linie angedeuteter Querschnitt der flachen Flügel ersichtlich ist.

Die Luftleiteinrichtungen 19 können mit Hilfe von zwei Befestigungsbügeln 20 im unteren Bereich der Beförderungskapsel 8 befestigt sein, wobei die Befestigungsbügel 20 an der Beförderungskapsel 8 und die Flügel 19 an je einem Befestigungsbügel 20 drehbar gelagert ausgebildet sein können. Die Befestigungsbügel 20 können der Form des unteren Bereiches der Beförderungskapsel 8 folgen. Hiermit können die Luftleiteinrichtungen 19 eng an die Beförderungskapsel 8 angeklappt und im Bedarfsfall weit von dieser abgeklappt werden (Figur 14: Punktlinie mit Doppelpfeil).

Bei Start und Landung des Fluggerätes werden die Flügel 19 an die Beförderungskapsel 8 angeklappt, um möglichst keine negative Beeinflussung des Luftstromes zu generieren. Während des Reisefluges (Vorwärtsfluges) des Fluggerätes 1 mit dem angekoppelten Transportmodul 7 können die Flügel 19 ausgeklappt werden und helfen aufgrund ihres aerodynamischen Auftriebes, das Transportmodul 7 zu tragen, so dass das Flugmodul 2 weniger Tragarbeit leisten muss und somit mehr Leistung für den Vorwärtsflug aufbringen kann.

Vorzugsweise sind die Flügel 19 im unteren Bereich des Transportmoduls 7 angeordnet, da hier die Beeinflussung durch den Abstrom der Propeller 6 des Flugmoduls 2 am geringsten ist.

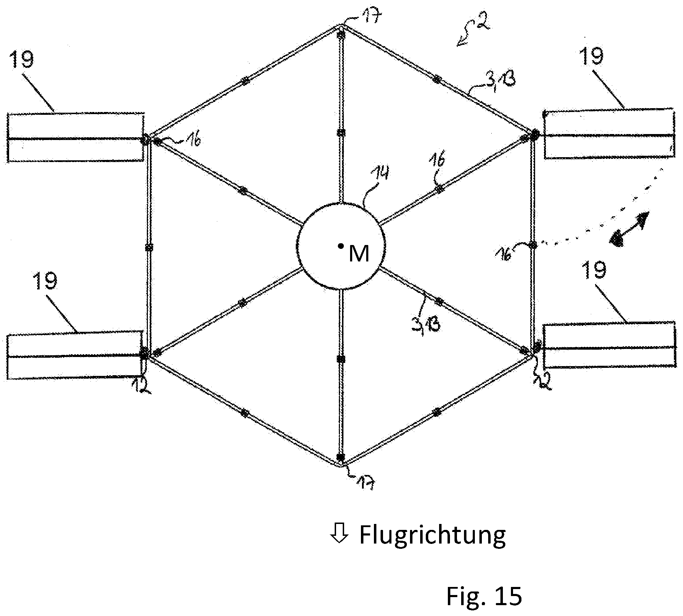

Figur 15 zeigt ein Flugmodul 2 mit vier Luftleiteinrichtungen 19, welche ebenfalls als Auftriebsmittel fungieren. Die Luftleiteinrichtungen 19 weisen flächige Flügel 19 auf. Sie können an den Tragwerksbalken 13 der Tragwerksstruktur 3 des Flugmoduls 2 oder an den Verbindungsstücken zur Verbindung der Tragwerksbalken 13 der Tragwerksstruktur 3 befestigt werden. Sie können drehbar gelagert ausgebildet sein, so dass die Luftleiteinrichtungen 19 an die Tragwerksstruktur 3 angeklappt und von dieser abgeklappt werden können(Punktlinie mit Doppelpfeil).

Die Luftleiteinrichtungen 19 weisen jeweils einen flächigen Flügel 19 auf, der zum Beispiel auch um seine Längsachse drehbar gelagert ist.

Bei entsprechend schnellem Vorwärtsflug in gezeigter Flugrichtung werden die Flügel ausgeklappt und unterstützen die Propeller 6 der Antriebseinheiten 4 (hier nicht sichtbar) dabei, einen zusätzlichen Auftrieb des Fluggerätes 1 zu erzeugen.

Zusätzlich können die Flügel um ihre Längsachse gedreht werden, um den Anstellwinkel gegenüber der Luftströmung zu verändern und damit den Auftrieb anzupassen.

Vorzugsweise sind die Flügel im oberen oder seitlichen Bereich der Tragwerksstruktur 3 des Flugmoduls 2 an den Tragwerksbalken 13 angeordnet, da hier die Beeinflussung durch den Abstrom der Propeller 6 am geringsten ist.

Alle Lufteinrichtungen 19 der Ausführungen nach den Figuren 13 bis 15 können in ihrer Ausrichtung zur Beförderungskapsel 8 des Transportmoduls 7 bzw. zur Tragwerkstruktur 3 des Flugmoduls 2 steuerbar einstellbar ausgebildet sein, so dass die Funktion während des Flugbetriebes optimal an die Strömungsverhältnisse etc. angepasst werden kann.

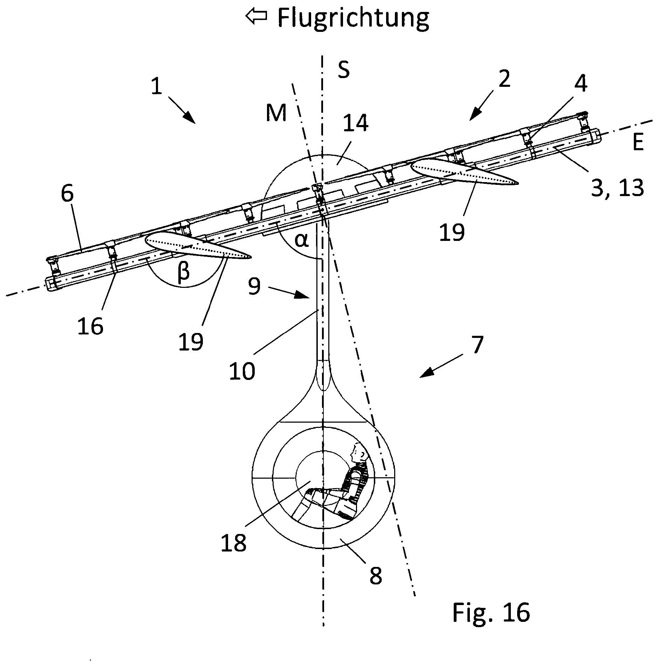

Figur 16 zeigt ein Fluggerät 1 in einer Seitenansicht mit einem in Flugrichtung nach unten geneigtem Flugmodul 2 mit einem Neigungswinkel α von ungefähr 75°. Der Neigungswinkel α wird von der Ebene E der Tragwerksstruktur 3 und der senkrecht verlaufenden Schwerkraftlinie S, die in der Darstellung der Fig. 16 der vertikal verlaufenden Längsachse des Schafts 10 entspricht, eingeschlossen. Die Lage der Mittelachse des Flugmoduls 2 weicht hierbei von der senkrecht verlaufenden Schwerkraftlinie S ab.

Eine solcher Neigungswinkel α des Flugmoduls kann beispielsweise während des Beschleunigens des Fluggeräts 1 eingestellt werden, wobei eine komfortable, vertikale Ausrichtung zur Beförderungskapsel 8 des Transportmoduls 7 beibehalten ist.

Die Figur 16 zeigt zudem zwei der vier Luftleiteinrichtungen 19 des Flugmoduls 2, die wie in der Draufsicht gemäß Figur 15 dargestellt, an der Tragwerkstruktur des Flugmoduls 2 angeordnet sind. Die Luftleiteinrichtungen 19 sind gegenüber der Ebene E der Tragwerksstruktur 3 mit einem Anstellwinkel β von ungefähr 150° angestellt. Der Anstellwinkel β wird von der Ebene E der Tragwerksstruktur 3 und der mittleren Querschnittsebene der Luftleiteinrichtung 19 eingeschlossen.

In einer Bremssituation (nicht dargestellt) können die Neigung des Flugmoduls 2 gegenüber der Schwerkraftlinie S sowie die Anstellung der Luftleiteinrichtungen 19 entgegengesetzt erfolgen, so dass sich beispielsweise ein Neigungswinkel α von ungefähr 105° und der Anstellwinkel β von ungefähr 235° ergeben können.

Hinsichtlich der weiteren Elemente des Fluggeräts 1 der Figur 16 wird auf die vorherigen Erläuterungen verwiesen.

Der hier verwendete Ausdruck "und/oder", wenn er in einer Reihe von zwei oder mehreren Elementen benutzt wird, bedeutet, dass jedes der aufgeführten Elemente alleine verwendet werden kann, oder es kann jede Kombination von zwei oder mehr der aufgeführten Elemente verwendet werden.

Wird beispielsweise eine Beziehung beschrieben, die die Komponenten A, B und/oder C, enthält, kann die Beziehung die Komponenten A alleine; B alleine; C alleine; A und B in Kombination; A und C in Kombination; B und C in Kombination; oder A, B, und C in Kombination enthalten.

### Bezugszeichenliste

- 1: Fluggerät
- 2: Flugmodul
- 3: Tragwerksstruktur
- 4: Antriebseinheit
- 5: Elektromotor
- 6: Propeller
- 7: Transportmodul
- 8: Beförderungskapsel
- 9: Verbindungseinrichtung
- 10: Schaft
- 11: Kupplungseinrichtung
- 12: Knotenpunkt
- 13: Tragwerksbalken
- 14: Zentraleinheit
- 15: Sicherheitshöhenabstand
- 16: Befestigungsmittel
- 17: Verbindungsstück
- 18: Tür
- 19: Luftleiteinrichtung
- 20: Befestigungsbügel

- R1, R2, R3: erster, zweiter, dritter Ring
- d1, d2, d3: Durchmesser des Rotors
- DR1, DR2, DR3: Durchmesser des Rings

- M: Mittelachse des Flugmoduls
- E: Ebene der Tragwerksstruktur
- S: Schwerkraftlinie

- α: Neigungswinkel
- β: Anstellwinkel

## Patentansprüche

1. Senkrecht startendes und landendes modulares Fluggerät (1) zum Transport von Personen und/oder Lasten aufweisend:
- ein Flugmodul (2) mit mehreren an einer Tragwerksstruktur (3) angeordneten Antriebseinheiten (4), wobei jede Antriebseinheit (4) einen Elektromotor (5) und einen mit dem Elektromotor (5) in Wirkverbindung stehenden Propeller (6) aufweist,
- ein Transportmodul (7) aufweisend eine Beförderungskapsel (8) und eine Verbindungseinrichtung (9) zur Verbindung der Beförderungskapsel (8) mit dem Flugmodul (2), wobei die Verbindungseinrichtung (9) einen längserstreckten Schaft (10) aufweist, der einen Endes an die Beförderungskapsel (8) anschließt, und
- eine Kupplungseinrichtung (11) ausgebildet als Gelenkkupplung zum An- und Abkuppeln des Flugmoduls (2) und zur Neigungseinstellung zwischen Flugmodul (2) und Transportmodul (7), wobei zur lösbaren Verbindung des Flugmoduls (2) mit einem anderen Ende des längserstreckten Schafts (10) des Transportmoduls (7) ein erster Teil der Kupplungseinrichtung (11) am Flugmodul (2) und ein zweiter Teil der Kupplungseinrichtung (11) als Gegenstück am anderen Ende des längserstreckten Schafts (10) des Transportmoduls (7) ausgebildet ist, wobei die Kupplungseinrichtung (11) selbsttätig ausgebildet ist.

2. Fluggerät (1) gemäß Anspruch 1, wobei das Fluggerät (1), vorzugsweise das Flugmodul (2) und/oder das Transportmodul (7), eine oder mehrere Luftleiteinrichtungen (19) aufweist.

3. Fluggerät (1) gemäß Anspruch 2, wobei ein Anstellwinkel β der Luftleiteinrichtungen (19) variierbar ist.

4. Fluggerät (1) gemäß einem der vorstehenden Ansprüche, wobei das Flugmodul (2) eine Zentraleinheit (14) aufweist.

5. Fluggerät (1) gemäß einem der vorstehenden Ansprüche, wobei die Tragwerksstruktur (3) des Flugmoduls (2) an Knotenpunkten (12) miteinander verbundene Tragwerksbalken (13) aufweist und wobei eine Anzahl der Antriebseinheiten (4) außerhalb der Knotenpunkte (12) angeordnet ist.

6. Fluggerät (1) gemäß einem der vorstehenden Ansprüche, wobei die Rotoren der Propeller (6) einer Anzahl der Antriebseinheiten (4) unterschiedliche Durchmesser (d1, d2, d3) aufweisen.

7. Fluggerät (1) gemäß einem der vorstehenden Ansprüche, wobei eine Anzahl von Tragwerksbalken (13) ein Hohlprofil, vorzugsweise mit einem ovalen Profilquerschnitt, aufweist.

8. Fluggerät (1) gemäß einem der vorstehenden Ansprüche, wobei der Schaft (10) der Verbindungseinrichtung (9) derart erstreckt ausgebildet ist, dass ein Sicherheitshöhenabstand (15) der Kupplungseinrichtung (11) oberhalb der Beförderungskapsel (8) hergestellt ist.

9. Fluggerät (1) gemäß einem der vorstehenden Ansprüche, wobei der Schaft (10) der Verbindungseinrichtung (9) im Wesentlichen rotationssymmetrisch ausgebildet ist und/oder wobei die Beförderungskapsel (8) des Transportmoduls (2) rotationssymmetrisch und/oder im Wesentlichen tropfenförmig ausgebildet ist.

10. Fluggerät (1) gemäß einem der vorstehenden Ansprüche, wobei ein Neigungswinkel α des Flugmoduls (2) variierbar ist.

11. Fluggerät (1) gemäß einem der vorstehenden Ansprüche, wobei die Tragwerksstruktur (3) und/oder die Zentraleinheit (14) und/oder eine Anzahl der Antriebseinheiten (4) Bauelemente aus Faserverbundwerkstoff aufweisen oder aus Faserverbundwerkstoff bestehen.

12. Fluggerät (1) gemäß einem der vorstehenden Ansprüche, wobei das Transportmodul (7), vorzugsweise der Schaft (10) und/oder die Beförderungskapsel (8), einen Faserverbundwerkstoff aufweist oder aus Faserverbundwerkstoff besteht.

13. Fluggerät (1) gemäß Anspruch 11 oder 12, wobei der Faserverbundwerkstoff textile Verstärkungselemente aufweist.

14. Fluggerät (1) gemäß einem der Ansprüche 11 bis 13, wobei der Faserverbundwerkstoff unidirektional angeordnete Verstärkungsfasern aufweist.

## Claims

1. A vertical take-off and landing modular aircraft (1) for transporting people and/or loads, having:
- a flight module (2) with several drive units (4) arranged on a wing assembly (3), wherein each drive unit (4) has an electric motor (5) and a propeller (6) operatively connected to the electric motor (5),
- a transport module (7) having a conveying pod (8) and a connecting device (9) for connecting the conveying pod (8) to the flight module (2), wherein the connecting device (9) has a longitudinally extended shaft (10) connected to one end of the conveying pod (8), and
- a coupling device (11) designed as an articulated coupling for coupling and uncoupling the flight module (2) and for tilt adjustment between flight module (2) and transport module (7), wherein for the detachable connection of the flight module (2) to another end of the longitudinally extended shaft (10) of the transport module (7), a first part of the coupling device (11) is formed on the flight module (2) and a second part of the coupling device (11) is formed as a counterpart on the other end of the longitudinally extended shaft (10) of the transport module (7), wherein the coupling device (11) is designed to operate automatically.

2. Aircraft (1) according to claim 1, wherein the aircraft (1), preferably the flight module (2) and/or the transport module (7), has one or more air guiding devices (19).

3. Aircraft (1) according to claim 2, wherein an angle of incidence β of the air guiding devices (19) is variable.

4. Aircraft (1) according to one of the preceding claims, wherein the flight module (2) has a central unit (14).

5. Aircraft (1) according to one of the preceding claims, wherein the wing assembly (3) of the flight module (2) has wing assembly struts (13) interconnected at node points (12) and wherein a number of the drive units (4) are arranged outside the node points (12).

6. Aircraft (1) according to one of the preceding claims, wherein the rotors of the propellers (6) of a number of the drive units (4) have different diameters (d1, d2, d3).

7. Aircraft (1) according to one of the preceding claims, wherein a number of wing assembly struts (13) have a hollow profile, preferably with an oval profile cross-section.

8. Aircraft (1) according to one of the preceding claims, wherein the shaft (10) of the connecting device (9) is designed to extend in such a way that a safety height clearance (15) of the coupling device (11) above the conveying pod (8) is ensured.

9. Aircraft (1) according to one of the preceding claims, wherein the shaft (10) of the connecting device (9) is designed to be essentially rotationally symmetrical and/or wherein the conveying pod (8) of the transport module (2) is designed to be rotationally symmetrical and/or essentially drop-shaped.

10. Aircraft (1) according to one of the preceding claims, wherein a tilt angle α of the flight module (2) is variable.

11. Aircraft (1) according to one of the preceding claims, wherein the wing assembly (3) and/or the central unit (14) and/or a number of the drive units (4) comprise components made of fibre-reinforced composite material or are made of fibre-reinforced composite material.

12. Aircraft (1) according to one of the preceding claims, wherein the transport module (7), preferably the shaft (10) and/or the conveying pod (8) comprises a fibre-reinforced composite material or is made of a fibre-reinforced composite material.

13. Aircraft (1) according to claim 11 or 12, wherein the fibre-reinforced composite material has textile reinforcing elements.

14. Aircraft (1) according to one of claims 11 to 13, wherein the fibre-reinforced composite material has unidirectionally arranged reinforcing fibres.

## Revendications

1. Aéronef modulaire (1) à décollage et atterrissage verticaux destiné au transport de personnes et/ou de charges, présentant :
- un module de vol (2) comprenant plusieurs unités de propulsion (4) disposées contre une structure porteuse (3), sachant que chaque unité de propulsion (4) présente un moteur électrique (5) et une hélice (6) en liaison active avec le moteur électrique (5),
- un module de transport (7) comprenant une capsule de transport (8) et un dispositif de connexion (9) pour connecter la capsule de transport (8) au module de vol (2), sachant que le dispositif de connexion (9) comprend une tige longitudinale (10) qui à une extrémité se raccorde à la capsule de transport (8), et
- un dispositif d'accouplement (11) conçu comme un accouplement articulé pour l'accouplement et le désaccouplement du module de vol (2) et pour le réglage de l'inclinaison entre le module de vol (2) et le module de transport (7), sachant que pour la liaison amovible du module de vol (2) avec une autre extrémité de la tige longitudinale (10) du module de transport (7), une première partie du dispositif d'accouplement (11) est réalisée sur le module de vol (2) et une deuxième partie du dispositif d'accouplement (11) est réalisée en tant que contre-pièce sur l'autre extrémité de la tige longitudinale (10) du module de transport (7), sachant que le dispositif d'accouplement (11) est configuré automatique.

2. Aéronef (1) selon la revendication 1, dans lequel l'aéronef (1), de préférence le module de vol (2) et/ou le module de transport (7), présente(nt) un ou plusieurs dispositif(s) de guidage d'air (19).

3. Aéronef (1) selon la revendication 2, dans lequel un angle d'attaque β des dispositifs de guidage d'air (19) est variable.

4. Aéronef (1) selon l'une quelconque des revendications précédentes, dans lequel le module de vol (2) comprend une unité centrale (14).

5. Aéronef (1) selon l'une des revendications précédentes, dans lequel la structure porteuse (3) du module de vol (2) présente des poutrelles (13) de la structure porteuse reliées entre elles au niveau de points nodaux (12), et dans lequel un certain nombre d'unités de propulsion (4) sont disposées en dehors des points nodaux (12).

6. Aéronef (1) selon l'une des revendications précédentes, dans lequel les rotors des hélices (6) d'un certain nombre d'unités de propulsion (4) présentent des diamètres différents (dl, d2, d3).

7. Aéronef (1) selon l'une des revendications précédentes, dans lequel un certain nombre de poutrelles (13) de la structure porteuse présentent un profilé creux, de préférence de section ovale.

8. Aéronef (1) selon l'une des revendications précédentes, dans lequel la tige (10) du dispositif de connexion (9) est configurée pour s'étendre de telle sorte qu'une hauteur de sécurité (15) du dispositif de couplage (11) est instaurée au-dessus de la capsule de transport (8).

9. Aéronef (1) selon l'une des revendications précédentes, dans lequel la tige (10) du dispositif de connexion (9) est réalisée essentiellement à symétrie de révolution et/ou dans lequel la capsule de transport (8) du module de transport (2) est réalisée à symétrie de révolution et/ou essentiellement en forme de goutte.

10. Aéronef (1) selon l'une des revendications précédentes, dans lequel un angle d'inclinaison a du module de vol (2) est variable.

11. Aéronef (1) selon l'une des revendications précédentes, dans lequel la structure porteuse (3) et/ou l'unité centrale (14) et/ou un certain nombre d'unités de propulsion (4) présente(nt) des éléments de construction en matériau composite renforcé de fibres ou est/sont en matériau composite renforcé de fibres.

12. Aéronef (1) selon l'une des revendications précédentes, dans lequel le module de transport (7), de préférence la tige (10) et/ou la capsule de transport (8), présente un matériau composite renforcé de fibres ou est en matériau composite renforcé de fibres.

13. Aéronef (1) selon la revendication 11 ou 12, dans lequel le matériau composite renforcé de fibres présente des éléments de renforcement textiles.

14. Aéronef (1) selon l'une des revendications 11 à 13, dans lequel le matériau composite renforcé de fibres comprend des fibres de renforcement disposées de manière unidirectionnelle.
